(19) Europäisches Patentamt / European Patent Office / Office européen des brevets

(11) **EP 4 439 233 A1**

(12) **EUROPEAN PATENT APPLICATION**

(43) Date of publication:
**02.10.2024 Bulletin 2024/40**

(21) Application number: **23213908.9**

(22) Date of filing: **04.12.2023**

(51) International Patent Classification (IPC):
**G06F 1/20** (2006.01)   **G06F 1/3206** (2019.01)
**G06F 1/3228** (2019.01)   **G06F 1/324** (2019.01)
**G06F 1/329** (2019.01)   **G06F 9/50** (2006.01)

(52) Cooperative Patent Classification (CPC):
**G06F 1/3228; G06F 1/206; G06F 1/3206;
G06F 1/324; G06F 1/329; G06F 1/3296;
G06F 9/5094**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2023 US 202318128946**

(71) Applicant: **Intel Corporation
Santa Clara, CA 95054 (US)**

(72) Inventors:
• **Dahiya, Somvir Singh
Hillsboro, OR 97124 (US)**
• **Kellar, Scot
Bend, OR 97703 (US)**
• **Gunther, Stephen H.
Beaverton, OR 97007 (US)**
• **Gallina, Mark
Hillsboro, OR 97123 (US)**
• **Rotem, Efraim
Santa Clara, 95051 (US)**
• **Jothi, Prasanna
560103 Bengaluru Karnataka (IN)**

(74) Representative: **Samson & Partner Patentanwälte mbB
Widenmayerstraße 6
80538 München (DE)**

(54) **APPARATUS AND METHOD TO CONTROL TEMPERATURE RAMP RATES INCLUDING TEMPERATURE SPIKE DETECTION AND CONTROL**

(57) An apparatus and method to control temperature ramp rates including temperature spike detection and control. For example, one embodiment of a processor comprises: a plurality of cores to execute instructions; a power management unit to control power consumption of each core of the plurality of cores, the power management unit comprising: a frequency ramp governor or power step governor to determine a frequency ramp rate limit or power step limit for a core of the plurality of cores based, at least in part, on a present frequency or present power metrics of the core; a frequency limiter or voltage limiter to determine a maximum frequency or maximum voltage of the core based, at least in part, on a measured temperature; and limit resolution circuitry to determine a first frequency or a first power level of the core in accordance with the frequency ramp rate limit or the power step limit and the maximum frequency or maximum voltage.

Fig. 1

EP 4 439 233 A1

Description

BACKGROUND

Field of the Invention

The embodiments of the invention relate generally to the field of computer processors. More particularly, the embodiments relate to an apparatus and method to control temperature ramp rates including temperature spike detection and control.

Description of the Related Art

Existing core frequency scaling algorithms are a function of core activity, the energy performance preference (EPP) values for each application thread, and the SoC power budget available for each core. The algorithm runs periodically and estimates the optimal core frequency based on the above inputs and ramps the core to the target frequency.
Some client SoCs do not limit the ramp rate of core frequency. For example, if an application is started on a core that is idle, core frequency can be ramped to one of its highest frequencies from its minimum frequency in one transition. Sharp frequency ramps help improve responsiveness but prove to be damaging in terms of power consumption and energy efficiency. For example, for application load times where latency can be tolerated, higher core frequencies result in higher average power consumption and lower energy efficiency with no added visible benefit to the user experience. Slower ramp rates are also desired when the system is in a reduced power mode, where the goal is to have a lower power floor to prolong battery usage. SoCs today are not capable of limiting the core frequency ramp rates, let alone varying the ramp rates based on system modes or application needs dynamically at runtime.

BRIEF DESCRIPTION OF THE DRAWINGS

A better understanding of the present invention can be obtained from the following detailed description in conjunction with the following drawings, in which:

FIG. 1 is a block diagram of a portion of a system in accordance with an embodiment of the present invention.
FIG. 2 illustrates one embodiment comprising a hardware guide unit;
FIG. 3 illustrate details for one embodiment of a guide unit;
FIG. 4 illustrates thread agnostic rankings in accordance with one embodiment;
FIG. 5 illustrates thread specific rankings in accordance with one embodiment;
FIG. 6 illustrates one embodiment of a prediction circuit/logic using event vectors and prediction weights;
FIG. 7A illustrates event vectors in accordance with some embodiments;
FIG. 7B illustrates prediction weights in accordance with some embodiments;
FIG 8 illustrates an architecture in accordance with some embodiments in which a global table is used to schedule execution on cores and/or logical processors;
FIG. 9 illustrates a disaggregated tile-based architecture on which embodiments of the invention may be implemented;
FIG 10 illustrates additional details of one embodiment of the disaggregated tile-based architecture;
FIG. 11 illustrates communication between power units in accordance with some embodiments;
FIG. 12 illustrates a plurality of power management stages for rendering power management decisions in accordance with some implementations;
FIG. 13 illustrates an architecture for generating a unified hint based on a plurality of generated hints in accordance with some embodiments;
FIG. 14 illustrates class coding and an associated power management process in accordance with some embodiments;
FIG. 15 illustrates an arrangement of temperature sensors in accordance with some embodiments;
FIG. 16 illustrates a plurality of energy performance preference (EPP) values associated with a plurality of IP blocks;
FIG. 17 illustrates a global power balancer in accordance with some embodiments;
FIGS 18A-B illustrate the impact of different core frequency ramp rates on performance and power;
FIG. 19 illustrates dynamic core frequency ramp rate selection circuitry/logic in accordance with some embodiments;
FIG. 20 illustrates a method for dynamic core frequency ramp rate selection in accordance with some embodiments of the invention;
FIG. 21-25 illustrates frequency/power changes and corresponding temperature changes for a core;
FIG. 26A-B illustrate a power management unit in accordance with different embodiments of the invention;

**FIG. 27** illustrates a method in accordance with some embodiments of the invention;

**FIG. 28** illustrates an implementation which detects and corrects thermal spikes in accordance with some embodiments of the invention; and

**FIG. 29** illustrates a method for detecting and correcting thermal spikes in accordance with embodiments of the invention.

## DETAILED DESCRIPTION

In various embodiments, techniques are provided for managing power and thermal consumption in a heterogeneous (hetero) processor. As used herein the term "hetero processor" refers to a processor including multiple different types of processing engines. For example, a hetero processor may include two or more types of cores that have different microarchitectures, instruction set architectures (ISAs), voltage/frequency (VF) curves, and/or more broadly power/performance characteristics.

Optimal design/operating point of a heterogeneous processor (in terms of VF characteristics, instructions per cycle (IPC), functionality/ISA, etc.) is dependent on both inherent/static system constraints (e.g., common voltage rail) and a dynamic execution state (e.g., type of workload demand, power/thermal state, etc.). To extract power efficiency and performance from such architectures, embodiments provide techniques to determine/estimate present hardware state/capabilities and to map application software requirements to hardware blocks. With varying power/thermal state of a system, the relative power/performance characteristics of different cores change. Embodiments take these differences into account to make both local and globally optimal decisions. As a result, embodiments provide dynamic feedback of per core power/performance characteristics.

More specifically, embodiments provide closed loop control of resource allocation (e.g., power budget) and operating point selection based on the present state of heterogeneous hardware blocks. In embodiments, a hardware guided scheduling (HGS) interface is provided to communicate dynamic processor capabilities to an operating system (OS) based on power/thermal constraints. Embodiments may dynamically compute hardware (HW) feedback information, including dynamically estimating processor performance and energy efficiency capabilities. As one particular example, a lookup table (LUT) may be accessed based on underlying power and performance (PnP) characteristics of different core types and/or postsilicon tuning based on power/performance bias.

In addition, embodiments may determine an optimal operating point for the heterogeneous processor. Such optimal operating point may be determined based at least in part on a present execution scenario, including varying workload demands (performance, efficiency, responsiveness, throughput, IO response) of different applications, and shifting performance and energy efficiency capabilities of heterogeneous cores.

In embodiments, the dynamically computed processor performance and energy efficiency capabilities may be provided to an OS scheduler. The feedback information takes into account power and thermal constraints to ensure that current hardware state is provided. In this way, an OS scheduler can make scheduling decisions that improve overall system performance and efficiency. Note that this feedback is not dependent on workload energy performance preference (EPP) or other software input. Rather, it is based on physical constraints that reflect current hardware state.

In contrast, conventional power management mechanisms assume all cores to be of the same type, and thus estimate the maximum achievable frequency on each core to be same for a given power budget. This is not accurate, as different cores may have different power/performance capabilities individually and they may have different maximum frequency based on other platform constraints. And further, conventional power management algorithms assume the same utilization target for all cores when calculating performance state (P-state) and hence do not take into account the heterogeneity of an underlying architecture. Nor do existing techniques optimize the operating points with an objective of mapping a particular type of thread to a core type based on optimizing power or performance.

In general, a HGS interface provides dynamic processor capabilities to the OS based on power/thermal constraints. The OS takes this feedback as an input to a scheduling algorithm and maps workload demand to hetero compute units. The scheduler's mapping decisions may be guided by different metrics such as performance, efficiency or responsiveness, etc. The scheduling decisions in turn impact processor states, hence forming a closed loop dependence. Since workload demand, in terms of power/performance requirements, can vary by large margins, any change in scheduling decisions can cause a large shift in HGS feedback, leading to unacceptable stability issues. Embodiments provide techniques that are independent/resilient of the scheduling decisions or other software inputs from the operating system, and thus avoid these stability issues.

Although the following embodiments are described with reference to specific integrated circuits, such as in computing platforms or processors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to any particular type of computer systems. That is, disclosed embodiments can be used in many different system types, ranging from server computers (e.g., tower, rack, blade, micro-server and so forth), communications systems, storage systems, desktop computers of any configuration, laptop, notebook, and tablet computers (including 2:1 tablets, phablets and so forth), and may be also used in other devices, such as handheld devices, systems on chip (SoCs), and embedded applications. Some examples of handheld devices include cellular phones such as smartphones, Internet protocol devices, digital cameras, personal digital assistants (PDAs), and handheld PCs. Embedded applications may typically include a microcontroller, a digital signal processor (DSP), network computers (NetPC), set-top boxes, network hubs, wide area network (WAN) switches, wearable devices, or any other system that can perform the functions and operations taught below. More so, embodiments may be implemented in mobile terminals having standard voice functionality such as mobile phones, smartphones and phablets, and/or in non-mobile terminals without a standard wireless voice function communication capability, such as many wearables, tablets, notebooks, desktops, micro-servers, servers and so forth. Moreover, the apparatuses, methods, and systems described herein are not limited to physical computing devices, but may also relate to software optimizations.

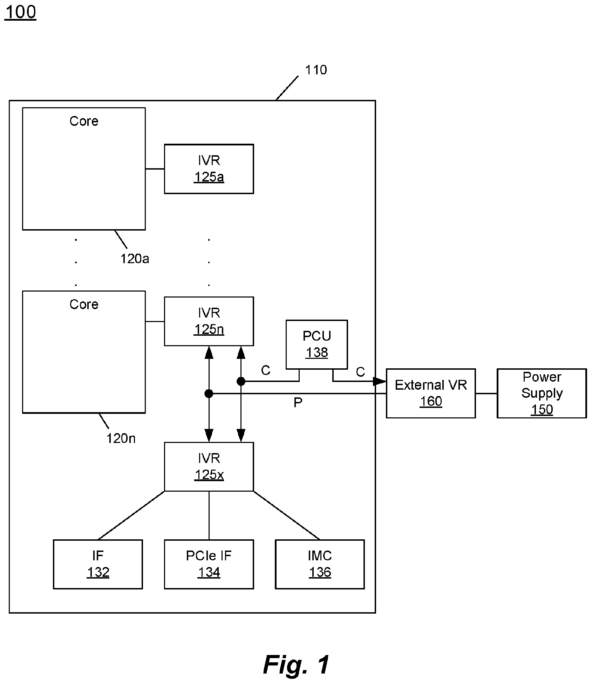

Referring now to FIG. 1, shown is a block diagram of a portion of a system in accordance with an embodiment of the present invention. As shown in FIG. 1, system 100 may include various components, including a processor 110 which as shown is a multicore processor. Processor 110 may be coupled to a power supply 150 via an external voltage regulator 160, which may perform a first voltage conversion to provide a primary regulated voltage to processor 110.

As seen, processor 110 may be a single die processor including multiple cores 120 a-120 n. In addition, each core may be associated with an integrated voltage regulator (IVR) 125 a-125 n which receives the primary regulated voltage and generates an operating voltage to be provided to one or more agents of the processor associated with the IVR. Accordingly, an IVR implementation may be provided to allow for fine-grained control of voltage and thus power and performance of each individual core. As such, each core can operate at an independent voltage and frequency, enabling great flexibility and affording wide opportunities for balancing power consumption with performance. In some embodiments, the use of multiple IVRs enables the grouping of components into separate power planes, such that power is regulated and supplied by the IVR to only those components in the group. During power management, a given power plane of one IVR may be powered down or off when the processor is placed into a certain low power state, while another power plane of another IVR remains active, or fully powered.

Still referring to FIG. 1, additional components may be present within the processor including an input/output interface 132, another interface 134, and an integrated memory controller 136. As seen, each of these components may be powered by another integrated voltage regulator 125 x. In one embodiment, interface 132 may be enable operation for an Intel® Quick Path Interconnect (QPI) interconnect, which provides for point-to-point (PtP) links in a cache coherent protocol that includes multiple layers including a physical layer, a link layer and a protocol layer. In turn, interface 134 may communicate via a Peripheral Component Interconnect Express (PCIe™) protocol.

Also shown is a power control unit (PCU) 138, which may include hardware, software and/or firmware to perform power management operations with regard to processor 110. As seen, PCU 138 provides control information to external voltage regulator 160 via a digital interface to cause the voltage regulator to generate the appropriate regulated voltage. PCU 138 also provides control information to IVRs 125 via another digital interface to control the operating voltage generated (or to cause a corresponding IVR to be disabled in a low power mode). In various embodiments, PCU 138 may include a variety of power management logic units to perform hardware-based power management. Such power management may be wholly processor controlled (e.g., by various processor hardware, and which may be triggered by workload and/or power, thermal or other processor constraints) and/or the power management may be performed responsive to external sources (such as a platform or management power management source or system software).

In embodiments herein, PCU 138 may be configured to dynamically determine hardware feedback information regarding performance and energy efficiency capabilities of hardware circuits such as cores 120 and provide an interface to enable communication of this information to an OS scheduler, for use in making better scheduling decisions. To this end, PCU 138 may be configured to determine and store such information, either internally to PCU 138 or in another storage of system 100.

Furthermore, while FIG. 1 shows an implementation in which PCU 138 is a separate processing engine (which may be implemented as a microcontroller), understand that in some cases in addition to or instead of a dedicated power controller, each core may include or be associated with a power control agent to more autonomously control power consumption independently. In some cases a hierarchical power management architecture may be provided, with PCU 138 in communication with corresponding power management agents associated with each of cores 120.

While not shown for ease of illustration, understand that additional components may be present within processor 110 such as uncore logic, and other components such as internal memories, e.g., one or more levels of a cache memory hierarchy and so forth. Furthermore, while shown in the implementation of FIG. 1 with an integrated voltage regulator, embodiments are not so limited.

Processors described herein may leverage power management techniques that may be independent of and complementary to an operating system (OS)-based power management (OSPM) mechanism. According to one example OSPM technique, a processor can operate at various performance states or levels, so-called P-states, namely from PO to PN. In general, the P1 performance state may correspond to the highest guaranteed performance state that can be requested by an OS. In addition to this P1 state, the OS can further request a higher performance state, namely a PO state. This PO state may thus be an opportunistic or turbo mode state in which, when power and/or thermal budget is available, processor hardware can configure the processor or at least portions thereof to operate at a higher than guaranteed frequency. In many implementations a processor can include multiple so-called bin frequencies above the P1 guaranteed maximum frequency, exceeding to a maximum peak frequency of the particular processor, as fused or otherwise written into the processor during manufacture. In addition, according to one OSPM mechanism, a processor can operate at various power states or levels. With regard to power states, an OSPM mechanism may specify different power consumption states, generally referred to as C-states, CO, C1 to Cn states. When a core is active, it runs at a C0 state, and when the core is idle it may be placed in a core low power state, also called a core non-zero C-state (e.g., C1-C6 states), with each C-state being at a lower power consumption level (such that C6 is a deeper low power state than C1, and so forth).

Understand that many different types of power management techniques may be used individually or in combination in different embodiments. As representative examples, a power controller may control the processor to be power managed by some form of dynamic voltage frequency scaling (DVFS) in which an operating voltage and/or operating frequency of one or more cores or other processor logic may be dynamically controlled to reduce power consumption in certain situations. In an example, DVFS may be performed using Enhanced Intel SpeedStep™ technology available from Intel Corporation, Santa Clara, Calif., to provide optimal performance at a lowest power consumption level. In another example, DVFS may be performed using Intel TurboBoost™ technology to enable one or more cores or other compute engines to operate at a higher than guaranteed operating frequency based on conditions (e.g., workload and availability).

Another power management technique that may be used in certain examples is dynamic swapping of workloads between different compute engines. For example, the processor may include asymmetric cores or other processing engines that operate at different power consumption levels, such that in a power constrained situation, one or more workloads can be dynamically switched to execute on a lower power core or other compute engine. Another exemplary power management technique is hardware duty cycling (HDC), which may cause cores and/or other compute engines to be periodically enabled and disabled according to a duty cycle, such that one or more cores may be made inactive during an inactive period of the duty cycle and made active during an active period of the duty cycle.

THREAD SCHEDULING BASED ON PROCESSOR INFORMATION

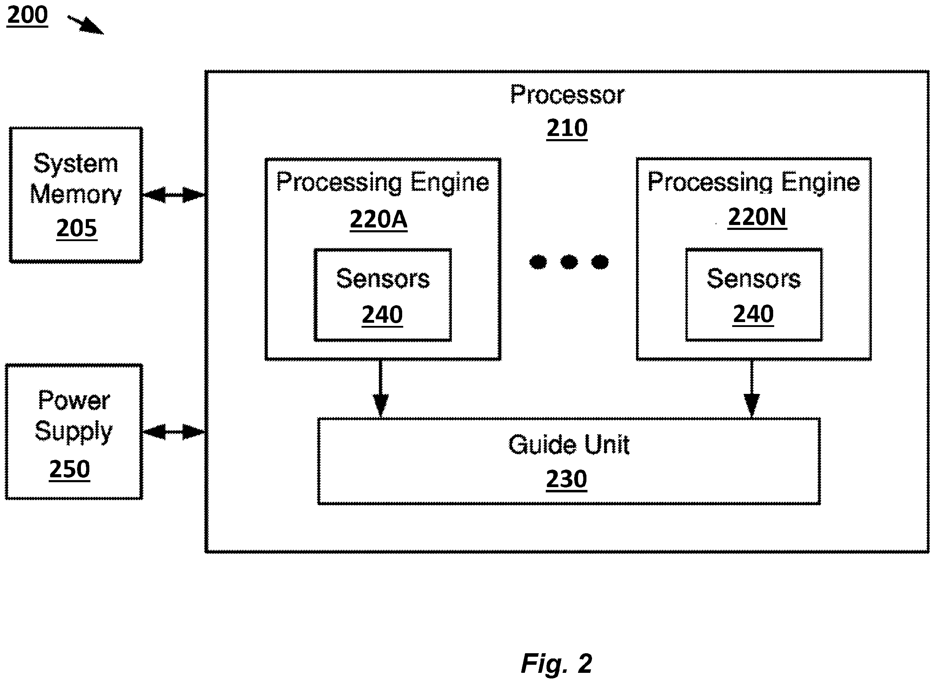

Referring now to **Figure 2,** shown is a block diagram of a system 200 in accordance with one or more embodiments. In some embodiments, the system 200 may be all or a portion of an electronic device or component. For example, the system 200 may be a cellular telephone, a computer, a server, a network device, a system on a chip (SoC), a controller, a wireless transceiver, a power supply unit, etc. Furthermore, in some embodiments, the system 200 may be part of a grouping of related or interconnected devices, such as a datacenter, a computing cluster, etc.

As shown in **Figure 2,** the system 200 may include a processor 210 operatively coupled to system memory 205 and a power supply 250. Further, although not shown in **Figure 2,** the system 200 may include other components. In one or more embodiments, the system memory 205 can be implemented with any type(s) of computer memory (e.g., dynamic random-access memory (DRAM), static random-access memory (SRAM), non-volatile memory (NVM), a combination of DRAM and NVM, etc.). The power supply 250 may provide electrical power to the processor 210.

In one or more embodiments, the processor 210 may be a hardware processing device (e.g., a central processing unit (CPU), a System on a Chip (SoC), and so forth). As shown, the processor 210 can include any number of processing engines 220A-220N (also referred to generally as processing engines 220) and a guide unit 230. Each processing engine 220 can include one or more sensors 240 to provide measurements regarding the processing engine 220 to the guide unit 230. For example, the sensors 240 may provide measurements regarding processing engine performance, efficiency, power usage, temperature, reliability, thread execution, and so forth.

In one or more embodiments, the guide unit 230 may be a hardware component of the processor 210 to provide processing engine information to guide a thread scheduler (not shown). In some embodiments, the processing engine information may include one or more rankings of processing engines (e.g., thread agnostic rankings, thread specific rankings, and so forth). Further, in some embodiments, the processing engine information may include one or more predicted characteristics of a processing engine. Various aspects of the guide unit 230 are described below.

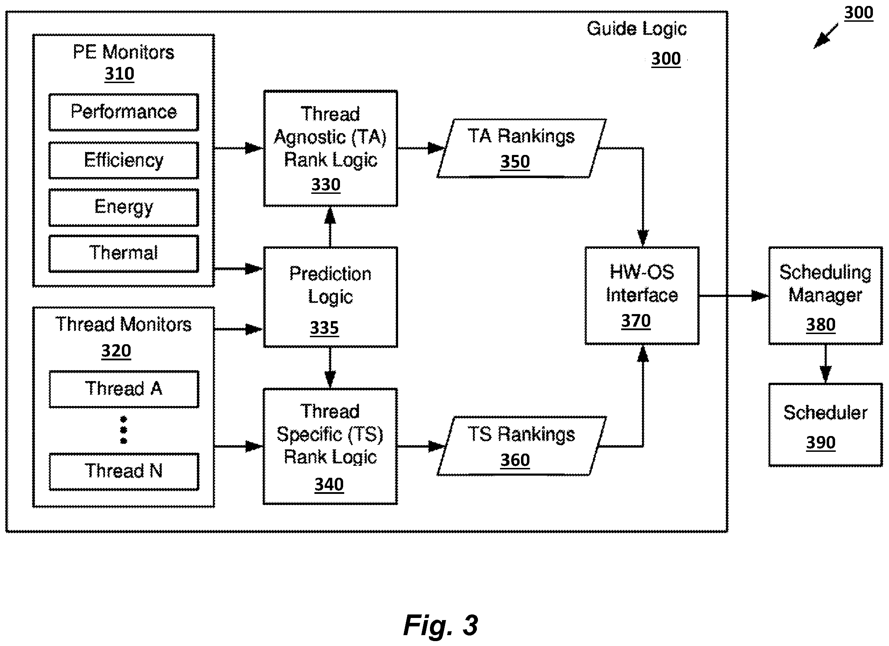

Referring to **Figure 3,** shown is a diagram of an example system 305, in accordance with one or more embodiments. The system 305 may include guide logic 300, a scheduling manager 380, and a scheduler 390. The guide logic 300 may correspond generally to some or all of the guide unit 230 (shown in **Figure 2**). In some embodiments, the guide logic 300 may be implemented at least in part using hardware.

As shown in **Figure 3,** the guide logic 300 may include processing engine (PE) monitors 310, thread monitors 320, thread agnostic (TA) rank logic 330, prediction logic 335, thread specific (TS) rank logic 340, and a hardware-operating system (HW-OS) interface 370. As used herein, "thread agnostic rank" refers to a rank that is independent from any particular thread or workload type. For example, some workload types may include compute-intensive (e.g., PE resources required), memory-intensive (e.g., memory controller bandwidth required), highly-parallelized (e.g., graphics processing resources required), accelerated (e.g., accelerator resources required), and so forth. In some embodiments, a single thread may be characterized as one or more workload types depending the instructions included in an instruction sequence.

In one or more embodiments, the PE monitors 310 may monitor characteristics of each PE without regard to a specific workload or thread. The monitored characteristics of each PE may include performance, efficiency, energy use, thermal, and reliability characteristics. For example, the PE monitors 310 may monitor metrics such as instructions per clock cycle, power consumed per time period, percentage of maximum performance, average power state, temperature, percentage of lifecycle that has elapsed, total number of power cycles, maximum power level, and so forth. The PE monitors 310 may be implemented using hardware counters.

In some embodiments, the PE monitors 310 may monitor and/or count system events representing PE execution characteristics (e.g., microarchitecture events, architecture events, system events, etc.). For example, the PE monitors 310 may determine the number of floating point instruction retired, the number of memory instructions retired, the number of branch mispredictions, the number of cache misses, the number of pipeline stalls, and so forth.

In one or more embodiments, the thread monitors 320 may monitor characteristics of individual threads. For example, the thread monitors 320 may monitor metrics such as instructions completed per time period, idle time, and so forth. Further, the thread monitors 320 may determine an execution profile and/or type, such as graphics processing, network processing, floating point calculation, encryption processing, and so forth. The thread monitors 320 may be implemented using hardware counters.

In some embodiments, the prediction logic 335 may use data from the PE monitors 310 and/or the thread monitors 320 to predict the performance of a thread on multiple PEs. For example, assume that a first thread is currently executing on a first PE (e.g., PE 220A shown in **Figure 2**) of a processor having multiple PEs. In some embodiments, the prediction logic 335 may analyze characteristics of the first thread, the first PE, and other PEs (e.g., PE 220N shown in Figure 2) to predict characteristics of the first thread if it were to instead be executed on the other PEs (e.g., if the first thread were moved to a second PE). The predictions performed by the prediction logic 335 are described further below.

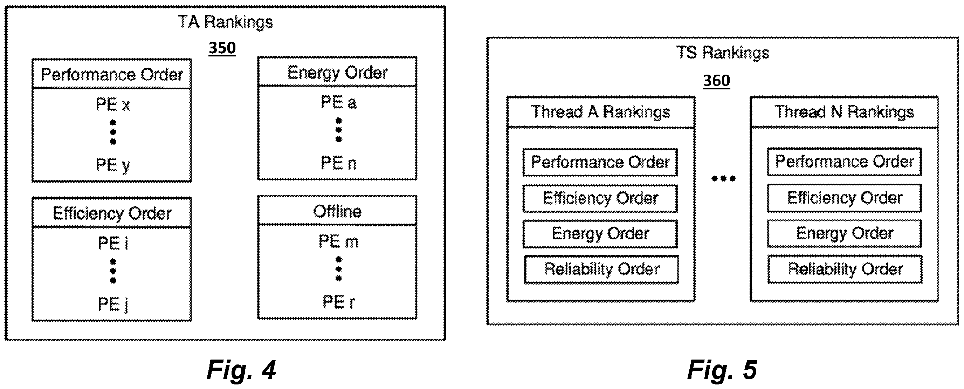

In one or more embodiments, the TA rank logic 330 may use data from the PE monitors 310 and/or the prediction logic 335 to generate one or more TA rankings 350. In some embodiments, each TA ranking 350 may include a list of PEs arranged in a particular thread agnostic order. Referring now to **Figure 4,** shown is an example set of TA rankings 350, in accordance with some embodiments. Specifically, as shown in **Figure 4,** the TA rankings 350 may include a performance order ranking, an efficiency order ranking, an energy order ranking, and an offline order ranking. In some embodiments, the performance order ranking may reflect the relative performance capabilities of the PEs (e.g., from fast processing to slowest processing). The efficiency order ranking may reflect the relative energy efficiency capabilities of the PEs (e.g., from most efficient to least efficient). The energy order ranking may reflect the relative power consumption of the PEs. The offline order ranking may indicate which PEs are to be taken offline, and/or a sequential order of the PEs in which they should be taken offline if necessary. In some embodiments, the TA rankings 350 may be stored in a global processor location or structure. For example, the TA rankings 350 may be stored in registers of a processor (e.g., processor 210 shown in Figure 2), in external memory (e.g., system memory 205 shown in Figure 2), and so forth.

Referring again to **Figure 3,** the TS rank logic 340 may use data from the thread monitors 320 and/or the prediction logic 335 to generate one or more TS rankings 360. In some embodiments, each TS ranking 360 may be associated with a particular thread, and may include a list of PEs arranged in an order specific to that particular thread. Referring now to **Figure 5,** shown is an example set of TS rankings 360, in accordance with some embodiments. For example, the TS rankings 360 may a PE ranking for thread A, a PE ranking for thread B, and so forth. In some embodiments, the TS rankings 360 may be stored in global processor memory structure. For example, the TA rankings 350 may be stored in registers of a processor, in external memory, in a thread context block maintained by the OS, and so forth. In some embodiments, the TS rankings 360 may be generated and/or updated in response to process context switch events.

Referring again to **Figure 3,** in some embodiments, the TA rankings 350 and the TS rankings 360 may be provided to the scheduling manager 380 via the hardware (HW)-OS interface 370. In some embodiments, the HW-OS interface 370 may include registers and/or memory structures defined at the PE and/or thread level. Further, the HW-OS interface 370 may include enumeration registers and capabilities that allow the OS to discover and/or identify specific support and definition of PE information provided by the guide logic 300. The HW-OS interface 370 may also support interrupt capabilities to alert the OS about status and/or events of the guide logic 300. In some embodiments, the HW-OS interface 370 includes the hardware feedback interface (HFI) described in detail below.

In one or more embodiments, the scheduling manager 380 and/or the scheduler 390 may implemented in software (e.g., the operating system, a stand-alone application, etc.). The scheduling manager 380 may control the amount and/or format of the TA rankings 350 and TS rankings 360 provided to the scheduler 390. For example, the scheduling manager 380 may sort PE rankings, may filter PE rankings according to criteria (e.g., by age, by PE group, by thread group, by type, and so forth), may combine multiple PE rankings to generate combined PE rankings, may reformat PE rankings, and so forth.

In one or more embodiments, the scheduler 390 may use the TA rankings 350 and/or the TS rankings 360 to allocate threads to PEs (e.g., PEs 220 shown in Figure 2). For example, the scheduler 390 may use PE information to schedule threads based on a current system priority, policy, or state (e.g., a specified balance between performance, efficiency, power consumption, and/or reliability priorities), based on thread specific characteristics (e.g., whether a thread is defined as a foreground task or a background task), to control temperature gradients and/or hot spots in PEs, and so forth.

In some embodiments, the TA rankings 350 and/or the TS rankings 360 may include indications to provide specific guidance to the scheduler 390. For example, a first PE may be assigned a rank value (e.g., "0") to indicate that the first PE is to remain offline and thus should not be assigned any threads. In some embodiments, a PE may be taken offline to improve reliability of the PE, to delay a lifecycle limit of the PE, to remain within a specified power budget, to limit power use during a particular power state, to control temperature gradients and/or hot spots in PEs, and so forth.

In some embodiments, the output of the guide logic 300 may reflect groupings of PEs according to defined criteria. For example, the PEs listed in the TA rankings 350 may be grouped into performance classes (e.g., Class A with performance metric from 0 to 2, Class B with performance metric from 3 to 7, and Class C with performance metric from 8 to 10). Such groupings may allow the scheduler 390 to manage thread allocations by groups rather than by individual PEs.

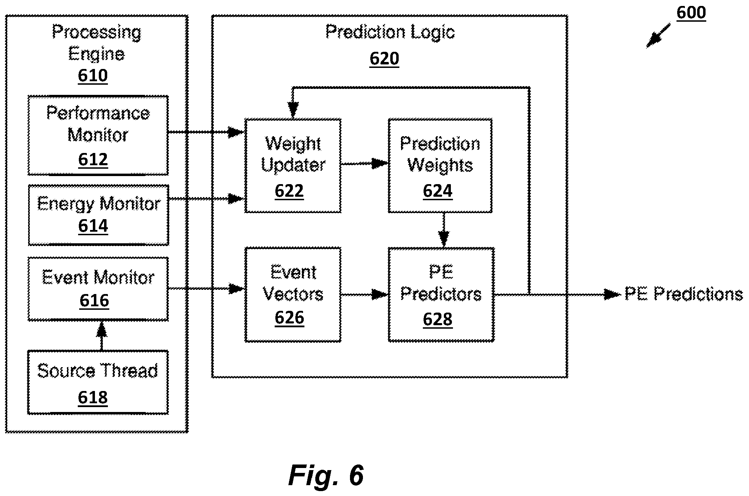

Referring now to **Figure 6,** shown is a diagram of an example system 600 in accordance with one or more embodiments. As shown, the system 600 may include a processing engine (PE) 610 and prediction logic 620. The prediction logic 620 may correspond generally to some or all of the prediction logic 335 shown in Figure 3A.

In some embodiments, the PE 610 may include a performance monitor 612, an energy monitor 614, and an event monitor 616. Further, the PE 610 may execute a source thread 618. The event monitor 616 may detect events of the PE 610 during execution of the source thread 618, such as memory instruction retirements, floating point instruction retirements, branch mispredictions, cache misses, pipeline stalls, and so forth. The performance monitor 612 may monitor performance characteristics of the PE 610 (e.g., instructions per clock cycle, percentage of maximum performance, etc.). The energy monitor 614 may monitor energy characteristics of the PE 610, such as power consumed per time period, power state, etc. In some embodiments, the performance monitor 612, the energy monitor 614, and/or the event monitor 616 may be implemented using hardware counters.

In one or more embodiments, the prediction logic 620 may include a weight updater 622, prediction weights 624, event vectors 626, and PE predictors 614. In some embodiments, the prediction logic 620 may receive indications of events from the event monitor 616 of PE 610, and may populate the event vectors 626 according to the received indications.

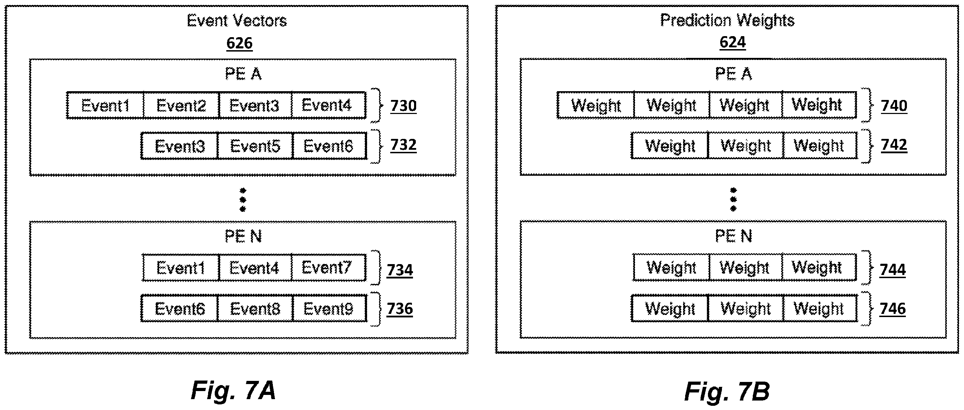

Referring now to **Figure 7A,** shown is an example set of event vectors 626, in accordance with some embodiments. As shown, the event vectors 626 may include groups of vectors associated with various PEs (i.e., PE A to PE N). In some embodiments, each event vector 626 may include a unique number of fields, with each field being associated with a unique type of event. For example, a group of vectors for PE A may include a performance vector 630 and an energy vector 632. The performance vector 630 may include four fields, with each field indicating the occurrence of a particular event type. For example, a performance vector 630 may include a first field to store a number of memory instruction retirements, a second field to store a number of floating point instruction retirements, and so forth. The energy vector 632 may include three fields, with each field indicating the occurrence of a particular event type.

It is contemplated that the event vectors 626 for different PEs (or different PE types) may include fields for different event types, and may include different numbers of fields. For example, the group of vectors for PE N may include a performance vector 634 with three fields, and an energy vector 636 with three fields.

In some embodiments, the prediction weights 624 may be arranged in vectors similar to the event vectors 626. Referring now to Figure 7B, shown is an example set of prediction weights 624 in accordance with some embodiments. As shown, the prediction weights 624 may include weight vectors 640, 642 for PE A. The weight vector 640 may include four weight fields that correspond to the performance vector 630. The weight vector 642 may include three weight fields that correspond to the energy vector 632 of PE A. Further, the weight vectors 644, 646 may correspond respectively to the performance vector 634 and energy vector 636 for PE B.

Referring again to Figure 6, the PE predictors 628 may generate PE predictions for executing the source thread 618 on other PEs. Specifically, the PE predictors 628 may use events in the processing engine 610 (as populated in the event vectors 626) and the prediction weights 624 to predict characteristics of source thread 618 if executed on different PEs (i.e., on PEs other than PE 610). For example, the PE predictors 628 may provide performance predictions, power usage predictions, clock frequency predictions, and so forth. The PE predictors 628 may include linear predictors (e.g., linear regression), non-linear predictors, reinforcement logic models, and so forth.

In one or more embodiment, the PE predictors 628 may use a linear predictor to multiply an event vector 626 by a weight vector of the prediction weights 624, and determine a predicted value based on a sum of the element products. For example, the linear predictor may multiply each element of performance vector 630 of PE A (shown in **Figure 7A**) by the corresponding element of weight vector 740 of PE A (shown in **Figure 7B**), and may sum the products of all vector elements. The resulting sum may be a predicted performance value for the source thread 618 if it was executed on PE A. In some embodiments, the predicted performance may be provided to a scheduler (e.g., scheduler 390 shown in Figure 3), and the scheduler may use this information to determine whether to move the source thread 618 to PE A from PE 610.

In one or more embodiment, the PE predictors 628 may provide predictions as to use a linear predictor to multiply an event vector 626 by a weight vector of the prediction weights 624, and determine a predicted value based on a sum of the element products. For example, the linear predictor may multiply each element of performance vector 730 of PE A by the corresponding element of weight vector 740 of PE A, and may sum the products of all vector elements. The resulting sum may be a predicted performance value for the source thread 618 if it was executed on PE A. In some embodiments, the predicted performance may be provided to a scheduler (e.g., scheduler 390), and the scheduler may use this information to determine whether to move the source thread 618 to PE A from PE 610.

In one or more embodiment, the weight updater 622 may compare PE predictions for a given PE to measured values to adjust the prediction weights 624. For example, assume that a scheduler receives predicted performance and energy characteristics for PE A, and then reallocates the source thread 618 to PE A. Assume further that PE A includes a performance monitor 612 and an energy monitor 614 that provide measured performance and energy characteristics for the execution of the source thread 618 on PE A. In this example, the weight updater 622 may compare the predicted and measured characteristics, and may adjust the prediction weights 624 based on this comparison. In this manner, the weight updater 622 may adjust the prediction weights 624 over time to improve the accuracy of future predictions of the prediction logic 620.

## APPARATUS AND METHOD FOR ADAPTIVELY SCHEDULING WORK ON HETEROGENEOUS PROCESSING RESOURCES

When a new thread is to be executed, the embodiments described below identify the class associated with the thread (or the default class) and select the logical processor available within that class having the highest performance and/or best energy efficiency values. If the optimal logical processor is not available, one embodiment of the invention determines the next best logical processor and either schedules the new thread for execution on the next best performance or energy cores, or migrates a running thread from the optimal logical processor to make room for the new thread. In one embodiment, the decision to migrate or not migrate the running thread is based on a comparison of performance and/or energy values associated with the new thread and the running thread. In one implementation, it is up to the OS to choose the appropriate scheduling method per software thread, ether based on energy consumption (e.g., for low power environments) or best performance

As used herein, a logical processor (LP) may comprise a processor core or a specified portion of a processor core (e.g., a hardware thread on the processor core). For example, a single threaded core may map directly to one logical processor whereas an SMT core may map to multiple logical processors. If the SMT core is capable of simultaneously executing N threads, for example, then N logical processors may be mapped to the SMT core (e.g., one for each simultaneous thread). In this example, N may be any value based on the capabilities of the SMT core (e.g., 2, 4, 8, etc). Other execution resources may be associated with a logical processor such as an allocated memory space and/or portion of a cache.

In some case, the platform may include a mix of cores, some of which include SMT support and some of which do not. In some cases, the performance and energy results of a core that has SMT support may be better than results on a non-SMT core when running more than one software thread. In other cases, the non-SMT core may provide better performance/energy results. Thus, in one embodiment, the scheduling order is: (1) schedule first on the core with highest performance / energy; (2) second, scheduled on the core with the lower perf / energy capabilities; and (3) finally, schedule on the core with SMT support.

It has been observed that random scheduling of threads from different types of workloads on a set of heterogeneous cores can result in lower performance than would be possible when compared with more intelligent allocation mechanisms.

In some embodiments described below, the "small cores" are Atom processors and the "big cores" are Core i3, i5, i7, or i9 cores. These cores may be integrated on the same die and/or interconnected on the same processor package. Note, however, that the underlying principles of the invention are not limited to any particular processor architecture or any specific type of processor or core.

At the same amount of power, a small core such as an Atom processor may provide higher performance than that of a big core. This power/performance cross point is a function of the ratio of big core IPC over small core IPC (i.e., $IPC_B/IPC_S$) which is particularly impacted for single threads or a small number of threads. The different $IPC_B/IPC_S$ values also impact the potential to reduce energy in order to improve battery life. As the ratio decreases, scheduling work on big cores becomes less attractive from an energy savings perspective.

In one embodiment, different classes are defined for different types of workloads. In particular, one embodiment defines a first class of workloads with an $IPC_B/IPC_S$ ratio below 1.3, a second class of workloads with an $IPC_B/IPC_S$ ratio below 1.5, and a third class of workloads with an $IPC_B/IPC_S$ ratio above (or equal to) 1.5.

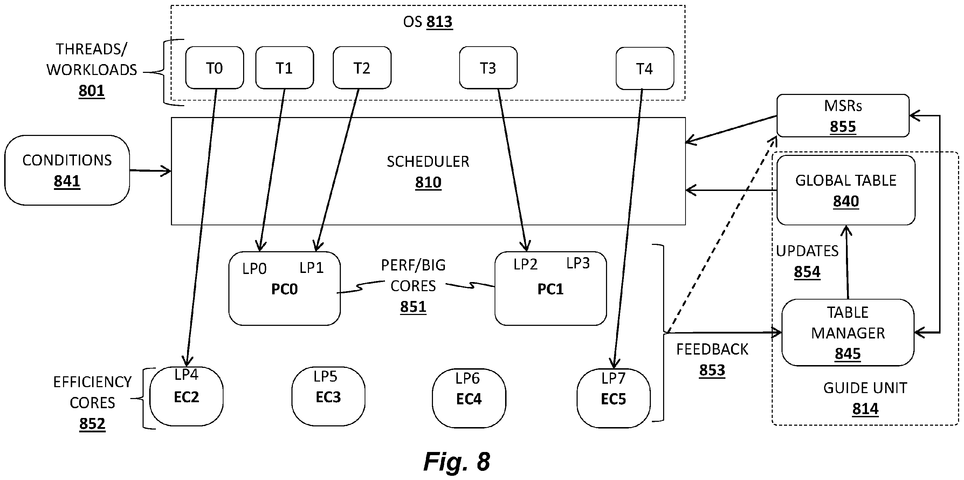

One embodiment of the invention maintains a global view of the performance and energy data associated with different workloads and core types as well as different classes of big/little IPC values. As shown in **Figure 8,** in one implementation, this is accomplished with a global table 840 which stores the performance, energy, and other data for each type of core 851-852 and/or logical processor (LP). The global table 840 and other logic shown in **Figure 8** (e.g., table manager 845) may be implemented in hardware or by a combination of hardware and software.

For the purpose of illustration, two types of cores are shown in **Figure 8:** performance cores 851 (sometimes referred to as "big" cores) and efficiency cores 852 (sometimes referred to as "little" cores). Note, however, that various additional cores and alternate combinations of big/little cores may be used. For example, some embodiments described below implement a disaggregated architecture in which an SoC/IO tile includes one or more cores (which may be selected during low utilization conditions so that the compute tiles can be moved into low power states).

In one embodiment, a scheduler 810 maps threads/workloads 801 to cores 851-852 and/or logical processors LP0-LP7 based on current operating conditions 841 and the performance and energy data from a global table 840 (described in greater detail below). In one embodiment, the scheduler 810 relies on (or includes) a guide/mapping unit 814 to evaluate different thread/logical processor mappings in view of the global table 840 to determine which thread should be mapped to which logical processor. The scheduler 810 may then implement the mapping. The scheduler 810, guide/mapping unit 814, table manager 845, and global table 840 may be implemented in hardware/circuitry programmed by software (e.g., by setting register values) or by a combination of hardware and software.

The currently detected operating conditions 841 may include variables related to power consumption and temperature, and may determine whether to choose efficiency values or performance values based on these conditions. For example, if the computing system is a mobile device, then the scheduler 810 may perform mapping using efficiency options more frequently, depending on whether the mobile device is currently powered by a battery or plugged into an electrical outlet. Similarly, if the battery level of the mobile computing system is low, then the scheduler 810 may tend to favor efficiency options (unless it would be more efficient to use a large core for a shorter period of time). As another example, if a significant amount of power of the overall power budget of the system is being consumed by another processor component (e.g., the graphics processing unit is performing graphics-intensive operations), then the scheduler 810 may perform an efficiency mapping to ensure that the power budget is not breached.

One embodiment of a global table 840, shown below as Table B, specifies different energy efficiency and performance values for each core 851-852 within each defined class (e.g., $Eff_{02}$, $Perf_{11}$, etc). The cores are associated with a logical processor number (LPO-LPn) and each logical processor may represent any type of physical core or any defined portion of a physical core, including an entire core.

In one embodiment, a table manager 845 performs updates to the global table 840 based on feedback 853 related to the execution of the different threads/workloads 801. The feedback may be stored in one or more MSRs 855 and read by the table manager 845.

The first time a thread/workload is executed, it may be assigned a default class (e.g., Class 0). The table manager 845 then analyzes the feedback results when executed in the default class, and if a more efficient categorization is available, the table manager 845 assigns this particular thread/workload to a different class. In one embodiment, the feedback 853 is used in one embodiment to generate an index into the global table 840. The classes in this embodiment are created based on ranges of $IPC_B/IPC_S$ as described above.

**TABLE B**

| Class 2 | | Class 1 | | Class 0 | | Cores |
|---|---|---|---|---|---|---|
| Energy Eff. | Perf | Energy Eff. | Perf | Energy Eff. | Perf | |
| $Eff_{02}$ | $Perf_{02}$ | $Eff_{01}$ | $Perf_{01}$ | $Eff_{00}$ | $Perf_{00}$ | LP0 |
| $Eff_{12}$ | $Perf_{12}$ | $Eff_{11}$ | $Perf_{11}$ | $Eff_{10}$ | $Perf_{10}$ | LP1 |
| | | | | | | .. |
| $Eff_{n2}$ | $Perf_{n2}$ | $Eff_{n1}$ | $Perf_{n1}$ | $Eff_{n0}$ | $Perf_{n0}$ | LPn |

In one embodiment, the scheduler 810 uses the global table 840 and associated information to realize a global view of the different core types and corresponding performance and energy metrics for different classes. Extensions to existing schedulers may add new columns per class type. In one embodiment, the different classes enable an operating system or software scheduler to choose different allocation mechanisms for a workload based on the class of that workload.

In one embodiment, Class 0 is defined as a default class which maintains legacy support and represents the median case of the curve. In this embodiment, the guide/mapping unit 814 and/or scheduler 810 uses this default class when no valid data has been collected for the current thread. As described above, the table manager 845 may evaluate feedback 853 related to the execution of the thread in the default class and provide an update 854 to the global table 840 if a different class is more appropriate. For example, it may categorize the thread into Class 1 if the $IPC_B/IPC_S$ ratio of the thread is greater than a first specified threshold (e.g., 1.5) and categorize the thread into Class 2 if the $IPC_B/IPC_S$ ratio is less than a second threshold (e.g., 1.3).

The different columns per class in the global table 840 may be specified via one or more control registers. For example, in an x86 implementation, the columns may be enumerated by CPUID[6].EDX[7:0] (e.g., for a table with 7-1 different columns per class). The operating system (OS) 813 and/or scheduler 810 can learn which line is relevant for each logical processor by one or more bits in EDX (e.g., CPUID.6.EDX[31-16] = n, where n is the index position which the logical processor's line is set) and can also determine the number of classes via a value in EDX (e.g., indicated by CPUID.6.EDX[11:8]). The OS can calculate the location of each logical processor line in the HGS table by the following technique:

If advanced hardware guided scheduling (e.g., HGS+) is enabled HGS Base Addr + 8 + FLOOR((# of classes * # of support capabilities bitmap set bits - 1) / 8+ 1) * 8 *( LPn row index +1)

else ( advanced hardware guided scheduling is disabled and basic hardware guided scheduling is enabled)

# HGS Base Addr + 8 + <u>8</u> * ( LPn row index +1)

The size of the HGS table can be enumerated by CPUID[6].EDX[11:8]

The OS can enumerate about the legacy HGS basic support from CPUID[6].EAX[19] and about the newer HGS+ support from CPUID[6].EAX[23]

In one embodiment, the performance capability values are non-semantic and do not necessarily reflect actual performance.

The performance columns in the table store relative performance values between the logical processors represented in the different rows. One embodiment of the interface provides for sharing of lines with a plurality of different logical processors that belong to the same core type, thereby providing for reasonable comparisons.

For each defined class, the ratio of performance values between cores within the same column such as $Perf_{ijk} = \frac{Perf_{ik}}{Perf_{jk}}$ provides a rough comparison but does not provide an actual performance value. Similarly, the ratio of energy efficiency values in a column such as $Enery_{ijk} = \frac{Energy_{ik}}{Energy_{jk}}$ for each logical processor provides a relative comparison, but does not reflect the actual energy consumed.

In one embodiment, the table manager 845 updates the global table 840 when the relative performance or energy value has experienced a significant change that can impact scheduling, such as when the order between the cores or the difference between the cores changes. These changes can be specified in one or more columns and, for each column that was updated, the column header is marked to indicate that the change was made. In addition, a status bit may be set in a control register to indicate that an update occurred. For example, in some x86 implementations, the status bit is set in a particular model-specific register (MSR).

The global table 840 can be updated dynamically as a result of physical limitations such as power or thermal limitations. As a result, part or all of the performance and energy class value columns may be updated and the order in which a core with the best performance or energy is selected may be changed.

When updates like this happen, the hardware marks the column(s) that was updated in the global table 840 (e.g., in the column header field). In addition, in one embodiment, the time stamp field is updated to mark the last update of the table.

In addition, the thermal status registers may also be updated and, if permitted by the OS, the thermal interrupts. An interrupt may also be generated to notify the OS about the changes. Following the setting of the thermal updates, the table manager 845 may not update the global table 840 any more until permitted by the OS (e.g., the OS clears the log bit). This is done in order to avoid making changes while the OS is reading the table.

Given that that different classes may be impacted in a different way for different physical limitations, one embodiment of the invention provides the ability to update only selected table classes. This configurability provides for optimal results even when the physical conditions are changed. Following an indication that the order of the class performance or energy is changed, the OS may reschedule software threads in accordance with each software thread's class index.

In one embodiment, in response to detected changes, a thread-level MSR 855 reports the index into the current thread column to the OS 813 and/or scheduler 810 as well as a valid bit to indicate whether the reported data is valid. For example, for a thread-level MSR 855, the following bits may provide indications for RTC (run time characteristics):

Bit 7:0 - Application class index of the table, representing the latest "Application Class" executed on this hardware thread;
Bit 63 - Valid bit; if set to 1, the OS/scheduler can use it, otherwise the class index should be ignored

In one embodiment, the valid bit is set or cleared based on the current state and operational characteristics of the microarchitecture. For example, the data may not be valid following a context switch of a new thread 801 until the hardware (e.g., the table manager 845) can evaluate or otherwise determine the characteristics of the new thread. The valid bit may also be adjusted when transitioning between specific security code flows. In circumstances where the valid bit is not set, the scheduler 810 may ignore the feedback data and use the last index known to be valid.

In one embodiment, the OS 813 and/or scheduler 810 reads this MSR 855 when swapping out a context in order to have the most up-to-date information for the next context swapped in. The OS 813 and/or scheduler 810 can also read the MSR 855 dynamically during runtime of the current software thread. For example, the OS/scheduler may read the MSR 855 on each tick of the scheduler 810.

In order for the hardware (e.g., the table manager 845) to have the time required to learn about the new thread and ensure the validity of the report index after the new context is swapped in, one embodiment of the invention provides the option to save and restore the microarchitectural metadata that includes the history of the index detection. In one implementation, this is accomplished using the MSR 855 which can be ether read or written as a regular MSR or by utilizing the processor's save and restore mechanisms (e.g., such as XSAVES/XRESROS on an x86 implementation). For example:

Thread level Scope MSR (Read/Write)
Bit 63:0 - software thread, hardware feedback history metadata. In one implementation, the OS 813 and/or scheduler 810 reads this metadata when swapping in the thread and updates it during execution and/or when swapping out the same thread.

In some implementations where metadata is not supported, prediction history is still need to be reset during a context switch in order to enable valid feedback that will not be impacted from previous execution of the software thread. This reset data may be enabled if the OS is configured to "opt-in" support of history reset every time that IA32_KENTEL_GS_BASE is executed. Other OS-based context switch techniques that include H/W architecture methods may also be used in order to reset the hardware guided scheduling prediction history during context switches. In another embodiment, a specific MSR is enabled with a control bit that forces resetting the history. This control MSR can be ether saved and restored by XSAVES/XRESORS or manually used by the OS on every context switch. other option can be that every time that the value of this MSR be zero, write or restore this MSR will reset the hardware guided scheduling history, Another embodiment resets the history via a thread level config MSR (as described below) that enables the option for the OS to manually reset the history.

The OS 813 and/or scheduler 810 can enable and disable the extension of the global table 840 via an MSR control bit. This may be done, for example, to avoid conflicts with legacy implementations and/or to avoid power leakage. For example, the operating system may dynamically disable the features described herein when running on legacy systems. While disabled, the feedback MSR thread level report is invalid. Enabling can be done at the logical processor level in order to provide, for example, the VMM the option to enable the techniques described herein for part of an SoC based on each VM usage mode (including whether the VM supports these techniques).

In one particular embodiment, the thread level configuration is implemented as follows:
IA32_HW_FEEDBACK_THREAD_CONFIG provides Read/Write thread level scope (Ox17D3)

- Bit 0: Enables logical processor support for the scheduling techniques described herein. When set to 1, enables the support of the thread level hardware feedback and resets its history. Default: 0.

- Bit 1: WRMSR_IA32_KERNEL_GS_BASE _CLEAR_HGS_HISTORY, when set, WRMSR of IA32_KERNEL_GS_BASE resets the prediction history. Default: 0

- Bit 2: Reset the history command bit, always reads as 0, reset the prediction history when set (written with '1')

In one implementation, the enabling and disabling is performed via a package-level MSR. For example, in an x86 implementation the following MSR may be specified:
IA32_HW_FEEDBACK_CONFIG

Bit 0 - Enable. When set to 1, this bit enables the hardware feedback interface described herein. The default is 0.
Bit 1 - Enable. When set to 1, this bit enables multiple class support. The extra classes columns in the global table 840 are valid only while bit 1 is set. Setting this bit enables the thread level feedback 853 sent to the MSR 855 to support valid report class indices.

As mentioned, when a new thread is to be executed, embodiments of the invention identify the class associated with the thread (or the default class) and select the logical processor (LP) available within that class having the highest performance and/or best energy efficiency values (depending on the current desired power consumption). If the optimal logical processor is not available, one embodiment of the invention determines the next best logical processor and either schedules the new thread for execution on the next best logical processor, or migrates a running thread from the optimal logical processor to make room for the new thread. In one embodiment, the decision to migrate or not migrate the running thread is based on a comparison of performance and/or energy values associated with the new thread and the running thread.

For a "High Priority" thread, the relevant column is determined based on the thread class index (k). In one embodiment, the index is provided by a feedback MSR 855. On the thread performance class column (k), a row is identified with the highest performance value. If the corresponding logical processor is free, then the thread is scheduled on this logical processor.

Alternatively, if all highest performance logical processors are occupied, the performance class column (k) is then searched for a free logical processor, working from highest to lowest performance values. When one is located, the thread may be scheduled on the free logical processor or a running thread may be migrated from the preferred logical processor and the new thread may be scheduled on the preferred logical processor.

In this embodiment, the scheduler 810 may evaluate whether to migrate an existing thread to a different logical processor to ensure a fair distribution of processing resources. In one embodiment, comparisons are made between the different performance values of the different threads and logical processors to render this decision, as described below.

Thus, in one embodiment, when a new thread must be scheduled for execution on a logical processor, the index of the new thread (I) is used to search for a free logical processor in the performance class associated with the new thread (e.g., one of the columns in the global table 840). If there is an idle logical processor with the highest performance value then the new thread is scheduled on the idle logical processor. If not, then a secondary logical processor is identified. For example, the scheduler may search down the column in the global table 840 to identify the logical processor having the second highest performance value.

An evaluation may be performed to determine whether to migrate any running threads from a logical processor which would be a highest performance LP for the new thread to a different logical processor to make room for the new thread on the highest performance logical processor. In one embodiment, this evaluation involves a comparison of the performance values of the running thread and the new thread on the highest performance logical processor and one or more alternate logical processors. For the new thread, the alternate logical processor comprises the secondary processor (i.e., which will provide the next highest performance for the new thread). For the running thread, the alternate logical processor may comprise the secondary logical processor (if it will provide the second highest performance) or another logical processor (if it will provide the second highest performance).

In one particular implementation, the ratio of the performance on highest performance LP over performance on the alternate LP for both the new thread and the running thread. If the ratio for the new thread is greater, then the running thread is migrated to its alternate logical processor. if the ratio for the running thread is greater, then the new thread will be scheduled on its alternate logical processor. The following are example ratio calculations:

$$\textit{New Thread Comp Value} = \textit{Perf}_{\textit{new thread highest}} / \textit{Perf}_{\textit{new thread alternate}}$$

$$\textit{Running Thread Comp Value} = \textit{Perf}_{\textit{running thread highest}} / \textit{Perf}_{\textit{running thread alternate}}$$

If the above ratio is greater for the new thread, then the running thread is migrated to its alternate logical processor (i.e., the LP on which it will have the second highest performance) and new thread is scheduled to execute on its highest performance logical processor. If the ratio is greater for the running thread, then the new thread is scheduled on the secondary LP (which will provide it with the second highest performance).

In one embodiment, when energy efficiency is selected as the determining factor, the same techniques as described above are implemented to determine the logical processor for the new thread but using the efficiency class data from the global table 840 instead of the performance class data. For example, the index of the new thread (I) is used to search for a free logical processor in the efficiency class associated with the new thread. If there is an idle logical processor with the highest efficiency value, then the new thread is scheduled on the idle logical processor. If not, then a secondary logical processor is identified. For example, the scheduler may search down the column in the global table 840 to identify the logical processor having the second best efficiency value. An evaluation is performed to determine whether to migrate any running threads from a logical processor which would be a highest efficiency LP for the new thread to a different logical processor to make room for the new thread. To render this decision, efficiency ratios may be determined as described above for performance:

$$New\ Thread\ Comp\ Value = Eff_{new\ thread\ highest}/Eff_{new\ thread\ alternate}$$

$$Running\ Thread\ Comp\ Value = Eff_{running\ thread\ highest}/Eff_{running\ thread\ alternate}$$

As with performance, the thread with the larger index is executed on the highest efficiency logical processor, while the other thread is run (or migrated) to an alternate logical processor.

The above analysis may be performed to allocate and migrate threads in the same or different performance and efficiency classes. If the new thread has a different class index as the other threads in busy logical processors, then the performance or efficiency ratio is determined using the highest performance or efficiency value over the next best performance or efficiency value for each of the threads currently running and/or new threads to be scheduled. Those threads with the highest ratios are then allocated to the highest performance or efficiency logical processors while the others are scheduled (or migrated) on the next best performance or efficiency logical processors.

In one embodiment, in order to migrate a running thread, the ratio of the new thread must be greater than the running thread by a specified threshold amount. In one embodiment, this threshold value is selected based on the amount of overhead required to migrate the running thread to the new logical processor (e.g., the processing resources, energy, and time consumed by the migration). This ensures that if the ratio of the new thread is only slightly higher than that of the running thread, then the running thread will not be migrated.

In one embodiment, the scheduler 810 performs a thread allocation analysis periodically (e.g., every 15ms, 20ms, etc) to perform the above performance and/or efficiency comparisons. If a higher performance or improved energy efficiency option is available, it will then migrate one or more threads between logical processors to achieve this higher performance or higher efficiency option.

Some existing scheduling implementations provide a global view of the performance and energy characteristics of different core/processor types. However, these implementations assume the same level of big/little IPCs and take the median value of all possible traces while ignoring the actual differences between different types of software threads. The embodiments of the invention address this limitation by considering these differences.

## APPARATUS AND METHOD FOR DYNAMIC CORE MANAGEMENT

Various embodiments of the invention evaluate different types of core parking and core consolidation hints, requests, and other relevant conditions to generate a resolved hardware-guided scheduling (HGS) hint, while architecturally meeting the requirements of dynamic core parking scenarios that may mall coexist in the processor. Some embodiments coordinate with the OS scheduler to determine a specific set of cores to be parked or consolidated in view of runtime metrics such as core utilization, thread performance, memory dependencies, core topology, and voltage-frequency curves. At least one embodiment allocates a power budget to different IP blocks in the processor to deliver a desired performance, recognizing the differences in the relative priority of each type of compute block as well as the differences in the power/frequency and frequency/performance relationships in each of the compute blocks. Some implementations allocate the power budget in view of a disaggregated, heterogeneous processor architecture with separate compute tiles, SoC tiles, graphics tiles, and IO tiles.

As used herein, a "parking" hint refers to a request or recommendation to avoid using specific cores (e.g., thereby "parking" the cores). The parking hints and other types of hints described herein may be communicated via a hardware feedback interface (HFI) storage such as a register (e.g., an MSR) or memory region allocated by the operating system (OS).

Currently, parking hints have the disadvantage of hiding the performance capabilities of the parked cores from the OS. As a result, when the OS has high priority work that no longer fits within the available cores, and it wants to run that work on a high performance core, it has no information as to what core to use.

A "consolidation" hint is a request generated to consolidate efficient work to a subset of the cores on the processor. In existing implementations, the OS may erroneously interpret this hint as a request to consolidate all work on this subset of cores, even if lower priority work must be deferred. A particular type of consolidation, referred to as "below PE consolidation" (BPC) attempts to contain the number of cores to bring the per-core frequency above a limit when the system is frequency limited.

Processor "survivability" features are activated when there are thermal and/or electrical reasons to reduce the number of cores to avoid shut down of the processor. In some implementations, survivability causes cores to be parked rather than contained to ensure that the OS will not start using more cores than hinted. In some embodiments, parking starts with the most power-consuming cores. For example, in the disaggregated architectures described below, the parking order may be: highest performance big cores (e.g., ULT big cores), big cores, compute die small cores (e.g., compute die Atom cores), and SoC die small core (e.g., SoC die Atom cores). In the final stages, the SoC may run out of a single SoC die core. In one embodiment, when only a single efficient core is active, the survivability feature is deactivated. Because this feature is critical, it overrides other hints/configuration settings; at the same time this condition is not expected to occur very often.

In some embodiments, because the goal of both below BPC and survivability is to reduce the number of cores, when BPC and survivability both are active, BPC is bypassed to avoid aggressive constraining when not required.

Various hardware-based techniques may be used for optimizing active cores. For example, with Hardware Guided Scheduling (HGS) (e.g., as implemented on hardware guide unit 814 described above), hints may be provided to the OS to not schedule work on a subset of cores (core parking) and/or hints to only schedule the work on a subset of cores (core consolidation), with the goal of improving overall power and performance (PnP). Some embodiments of the invention determine a specific set of cores to be parked or consolidated in view of the disaggregated architecture of the processor, various runtime metrics (e.g., core utilization, temperature), thread performance, memory dependencies, core topology, and voltage-frequency curves.

Examples of Heterogeneous Processors and Power Management Architectures

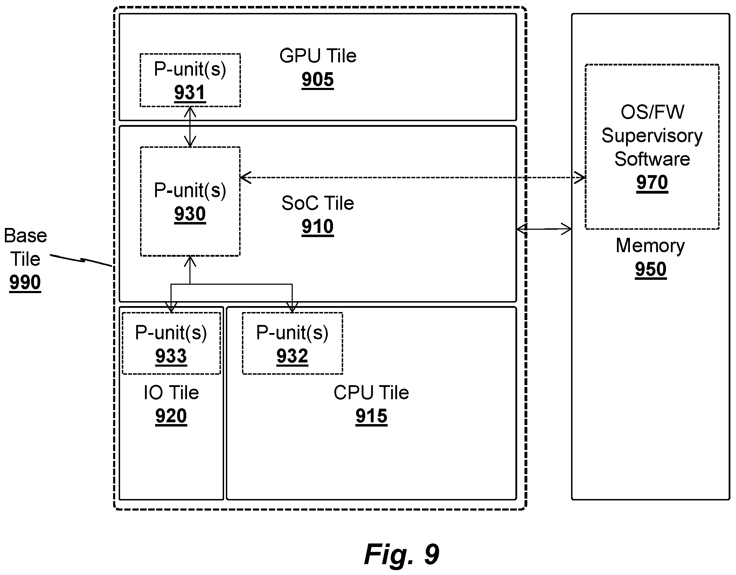

Figure 9 illustrates an example of a processor with a disaggregated architecture comprising an SoC tile 910, a CPU tile 915, A GPU tile 905, and an IO tile 920 which are integrated on a common base tile 990 coupled to a package substrate. In some embodiments, each tile comprises a separate die or chip which communicates with other dies/chips over horizontal and/or vertical interconnects (e.g., through-silicon vias). The SoC tile 910 includes a memory controller to couple the processor to system memory 950 and provides various other SoC-level functions such as coherent fabric interconnects between the various IP blocks, a display engine, and a low-power IP block which remains operational, even when the processor enters into low power states.

Some embodiments implement a distributed power management architecture comprising a plurality of power management units (P-units) 930-933 distributed across the various dies 905, 910, 915, 920, respectively. In certain implementations, the P-units 930-933 are configured as a hierarchical power management subsystem in which a single P-unit (e.g., the P-unit 930 on the SoC tile 910 in several examples described herein) operates as a supervisor P-unit which collects and evaluates power management metrics provided from the other P-units 931-933 to make package-level power management decisions and determine power/performance states at which each of the tiles and/or individual IP blocks are to operate (e.g., the frequencies and voltages for each of the IP blocks).

The supervisor P-unit 930 communicates the power/performance states to the other P-units 931-933, which implement the power/performance states locally, on each respective tile. In some implementation, the package-wide power management decisions of the supervisor P-unit 930 include decisions described herein involving core parking and/or core consolidation.

An operating system (OS) and/or other supervisory firmware (FW) or software (SW) 970 may communicate with the supervisory P-unit 930 to exchange power management state information and power management requests (e.g., such as the "hints" described herein). The hardware guide unit 814 and associated tables may be implemented in the supervisor P-unit 1030 and/or the SoC tile 910. In some implementations described herein, the communication between the OS/supervisory FW/SW 970 and the P-unit 930 occurs via a mailbox register or set of mailbox registers. In some embodiments, a Baseboard Management Controller (BMC) or other system controller may exchange power control messages with the supervisory P-unit 930 via these mailbox registers or a different set of mailbox registers.

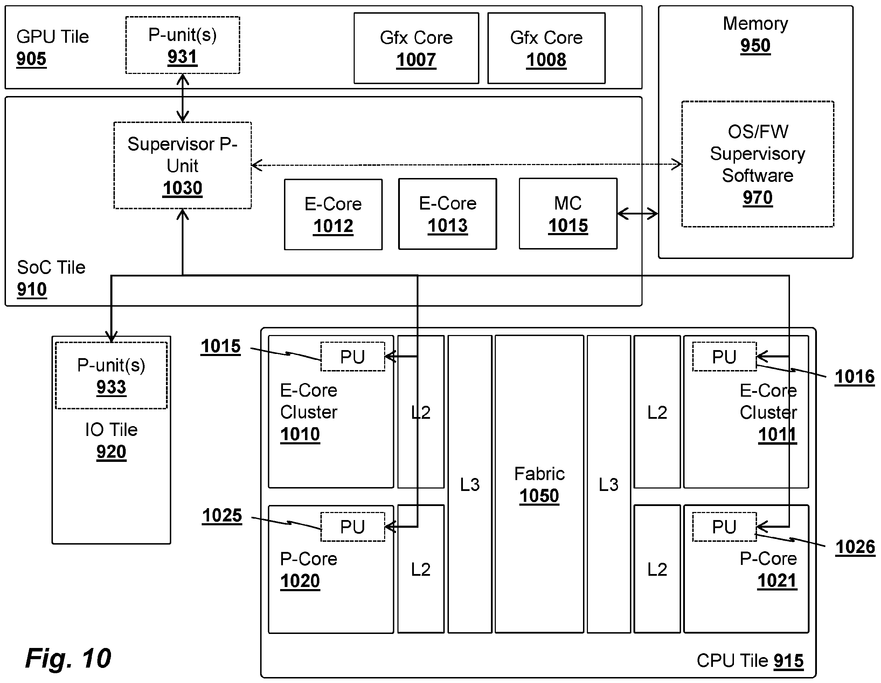

Figure 10 illustrates additional details of one embodiment of a CPU tile 915, which includes a heterogeneous set of cores including efficiency cores (E-cores) arranged into two E-core clusters 1010-1011 and a plurality of performance cores (P-cores) 1020-1021. Some embodiments of the SoC tile 910 include a set of E-cores 1012-1013 and a memory controller 1015 to couple the processor to system memory 950 (e.g., DDR DRAM memory, HBM memory, etc). Similarly, the GPU tile 905 includes a plurality of graphics cores 1007-1008 which may be managed in the same manner as the P-cores and E-cores as described herein.

The E-cores in the E-core clusters 1010-1011 and the SoC tile 910 are physically smaller (with multiple E-cores fitting into the physical die space of a P-core), are designed to maximize CPU efficiency, measured as performance-per-watt, and are typically used for scalable, multi-threaded performance. The E-cores work in concert with P-cores 1020-1021 to accelerate tasks which tend to consume a large number of cores. The E-cores are optimized to run background tasks efficiently and, as such, smaller tasks are typically offloaded to E-cores (e.g., handling Discord or antivirus software) - leaving the P-cores 1020-1021 free to drive high performance tasks such as gaming or 3D rendering.

The P-cores 1020-1021 are physically larger, highperformance cores which are tuned for high turbo frequencies and high IPC (instructions per cycle) and are particularly suited to processing heavy single-threaded work. In some embodiments, the P-cores are also capable of hyper-threading (i.e., concurrently running multiple software threads).

In the illustrated embodiment, separate P-units 1015-1016 are associated with each E-core cluster 1010-1011, respectively, to manage power consumption within each respective E-core cluster in response to messages from the supervisor P-unit 1030 and to communicate power usage metrics to the supervisor P-unit 1030. Similarly, separate P-units 1025-1026 are associated with each P-core 1020-1021, respectively, to manage power/performance of the respective P-core in response to the supervisor P-unit 1030 and to collect and communicate power usage metrics to the supervisor P-unit 1030.

In one embodiment, the local P-units 1015-1016, 1025-1026 manage power locally by independently adjusting frequency/voltage levels to each E-core cluster 1010-1011 and P-core 1020-1021, respectively. For example, P-units 1015-1016 control digital linear voltage regulators (DLVRs) and/or fully integrated voltage regulators (FIVRs) to independently manage the frequency/voltage applied to each E-core within the E-core clusters 1010-1011. Similarly, P-units 1025-1026 control another set of DLVRs and/or FIVRs to independently manage the frequency/voltage applied to each P-core 1020-1021. The graphics cores 1007-1008 and/or E-cores 1012-1013 may be similarly controlled via DLVRs/FIVRs. In these implementations, the frequency/voltage associated with a first core may be dynamically adjusted independently - i.e., without affecting the frequencies/ voltages of one or more other cores. The dynamic and independent control of individual E-cores/P-cores provides for processor-wide Dynamic Voltage and Frequency Scaling (DVFS) controlled by the supervisor P-unit 1030.

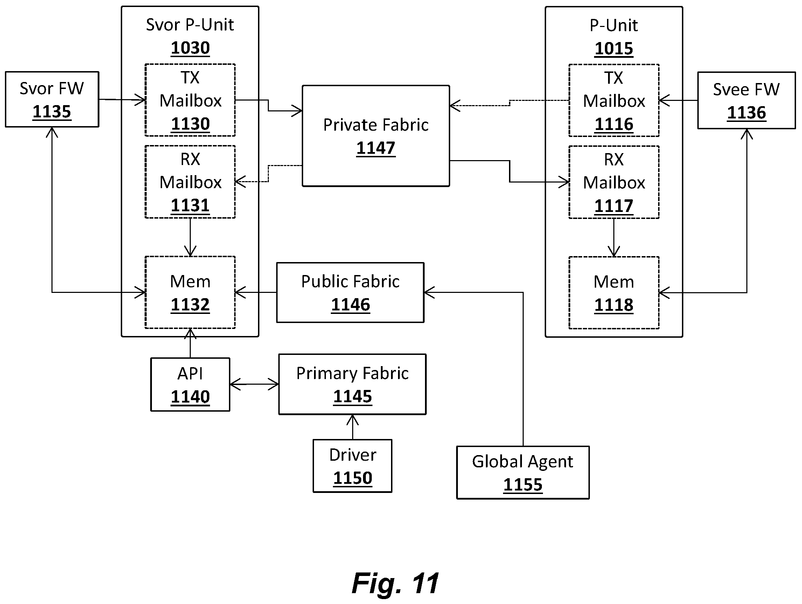

As illustrated in Figure 11, in some implementations, the supervisor P-unit 1030 and other P-units 1015 in the processor communicate via a private fabric 1147. The supervisor P-unit 1030 sends power management messages to other P-units 1015 via a transmit (TX) mailbox 1130 and receives messages from the other P-units via a receive (RX) mailbox 1131. Each of the other P-units (such as P-unit 1015, shown for simplicity) includes a TX mailbox 1116 for transmitting messages and an RX mailbox 1117 for receiving messages.

In some embodiments, the P-units 1030, 1015 include microcontrollers or processors for executing firmware 1135, 1136, respectively, to perform the power management operations described herein. For example, supervisor firmware (FW) 1135 executed by supervisor p-unit 1030 specifies operations such as transmission of messages sent to TX mailbox 1030, and over the private fabric 1147 to the RX mailbox 1117 of p-unit 1015. Here, the "mailbox" may refer to a specified register or memory location, or a driver executed in kernel space. Upon receiving the message, RX mailbox 1017 may save the relevant portions of the message to a memory 1118 (e.g., a local memory or a region in system memory), the contents of which are accessible by P-unit 1015 executing its copy of the FW 1136 (which may be the same as or different from the FW 1135 executed by the supervisor P-unit 1030).

In response to receiving the message, the P-unit 1015 executing the firmware 1136 confirms reception of the message by sending an Ack message to supervisor 1030 via TX mailbox 1116. The Ack message is communicated to RX mailbox 1131 via fabric 1147 and may be stored in memory 1132 (e.g., a local memory or a region in system memory). The supervisor P-unit 1030 (executing FW 1135) accesses memory 1132 to read and evaluate pending messages to determine the next course of action.

In various embodiments, supervisor p-unit 1030 is accessible by other system components such as a global agent 1155 (e.g., a platform supervisor agent such as a BMC) via public fabric 1146. In some embodiments, public fabric 1146 and private fabric 1147 are the same fabric. In some embodiments, the supervisor p-unit 1030 is also accessible by software drivers 1150 (e.g., operable within the OS or other supervisory FW/SW 970) via a primary fabric 1145 and/or application programming interface (API) 1140. In some embodiments, a single fabric is used instead of the three separate fabrics 1145-1147 shown in Figure 11.

Resolving Core Management Requests

In the architectures described herein, hints may be generated by a variety of system entities. For example, overclocking and other system software entities may attempt to force parking of certain cores. In addition, workload type (WLT) hints (e.g., indicating specific workload types such as bursty, sustain, battery life, idle) can result in consolidation of performance cores or energy-efficient cores. In disaggregated architectures, for certain energy-efficient workloads, it may be preferable to shut down the compute dies 1020-1021, 1010-1011, and run out of one or more of the E-cores 1012-1013 of the SoC die 910 ("SoC die biasing"), which may be accomplished with a parking/consolidation hint to the OS 970. However, there are other instances where SoC die biasing is not the correct choice for improved power/performance (PnP).

In current implementations, as the system becomes constrained, all cores may be forced to run below the current power state (Pe) limit. In these scenarios it may be preferable to reduce the number of cores and run at a frequency which is more efficient and gradually unpark the cores as the system becomes able to run all cores at an efficient frequency. Some embodiments of the invention use below Pe consolidation (BPC) to contain the number of cores and bring the per-core frequency above a specified limit (e.g., when the system is frequency-limited). When the system is close to a survivability point, even after processor actions are taken to reduce power, the cores may be gradually brought down one after the other via core parking hints. The power is monitored periodically until the system returns to a stable power limit. There may also be gaming or other platform/OEM driver-aware implementations that require the platform to be less noisy, cooler, or higher performing. In these cases the platform software can request to moderate the core parking actions that are taken via WLT to achieve the desired end state from a platform standpoint.

All of the above features rely on target core parking and consolidation. Given the large number of potential variables and hints/requests, it would be beneficial to resolve these hints into a single unified hint to be provided to the schedule, while architecturally meeting the requirements of different dynamic parking scenarios that all coexist in the processor at any point in time. It would also be beneficial to determine the individual cores to be parked based on the scenario at hand and in accordance with the architectural intent and in view of an optimal PnP.

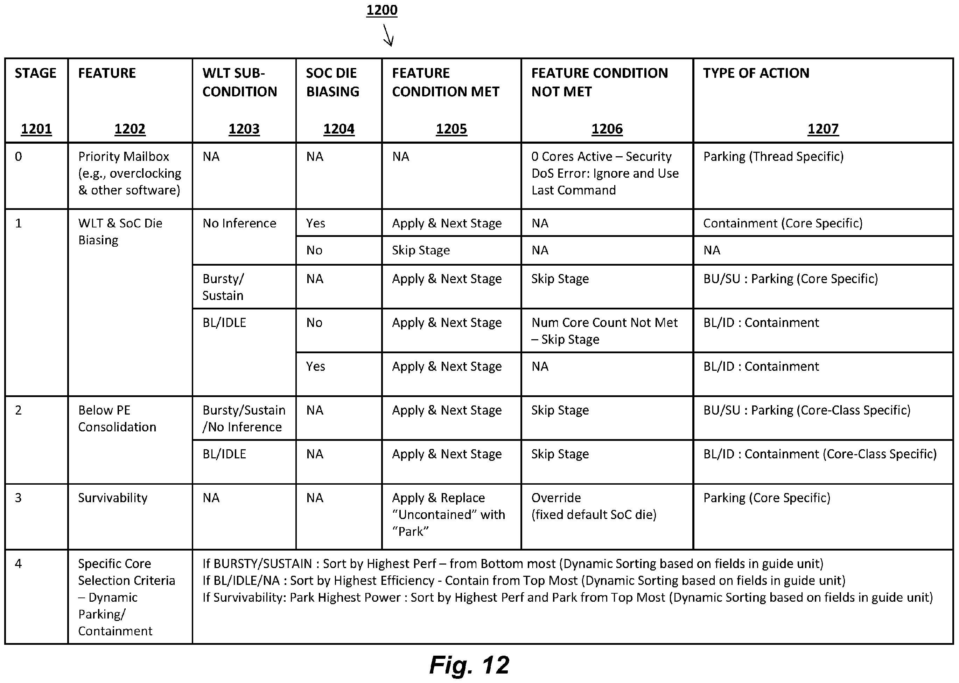

The table 1200 in Figure 12 lists the variables used to determine the specific cores to be parked/consolidated in accordance with some embodiments of the invention. Table 1200 includes columns indicating the name of the associated feature 1202, the WLT subcondition (if applicable) 1203, whether SoC die biasing is applicable and used 1204, operation when the feature condition is met 1205 and when not met 1206, and the type of action performed on the cores 1207.

In this example, as indicated in the "Stage 0" row, a priority mailbox is provided for overclocking and other software (e.g., gaming apps, ... etc) to submit parking requests which are assigned a high priority, thereby creating a boundary condition for further optimization. For example, the priority mailbox may be used to "park" or allocate a specific core or set of cores to a specific thread or group of threads (as indicated in column 1207). In some implementations, the specific cores requested via this mailbox are always be honored. Additional checks are added to avoid Security DoS, as indicated in column 1206.

The "Stage 1" row indicates workload type (WLT) and SoC die biasing requests in column 1202. In these embodiments, the biasing to use the SoC die is qualified with the specified WLT. If the WLT indicates "Bursty" or "Sustain" then work is not moved to the E-cores on the SoC die, as indicated in column 1204, whereas workload types associated with low workload requirements (e.g., BL/IDLE subconditions) are aligned towards moving work to the SoC die (which is capable of running independently at the lowest power states). However, in circumstances where the E-cores of the SoC Die would not be the most efficient cores (e.g., based on a dynamic analysis such as the current supply voltage of the SoC die), then idle/battery life (BL) work is consolidated to an equivalent set of E-cores cores on a compute die.

In general, the WLT indication may be used to determine whether to perform core parking or consolidation. For sustain/bursty workloads, core parking may be used (Perf=EE=0) as this allows the OS to restrict scheduling to P-cores. For battery life/idle WLTs, core consolidation may be used (EE=255) allowing the OS to expand to other cores as the utilization increases (e.g., as measured in workload queues).

In some embodiments, exceptions to the above are specified in view of survivability scenarios (described below).

Some implementations attempt to skip below the PE consolidation stage (reducing threads to improve the frequency floor) when a survivability trigger is reached (e.g., the electrical or thermal metrics reach a threshold). This will avoid duplication as both survivability and PE consolidation attempt to reduce the number of active cores to reduce power. PE consolidation does so to improve performance. While the high level operations are the same, at a lower level the core selection techniques are different (as described further below).

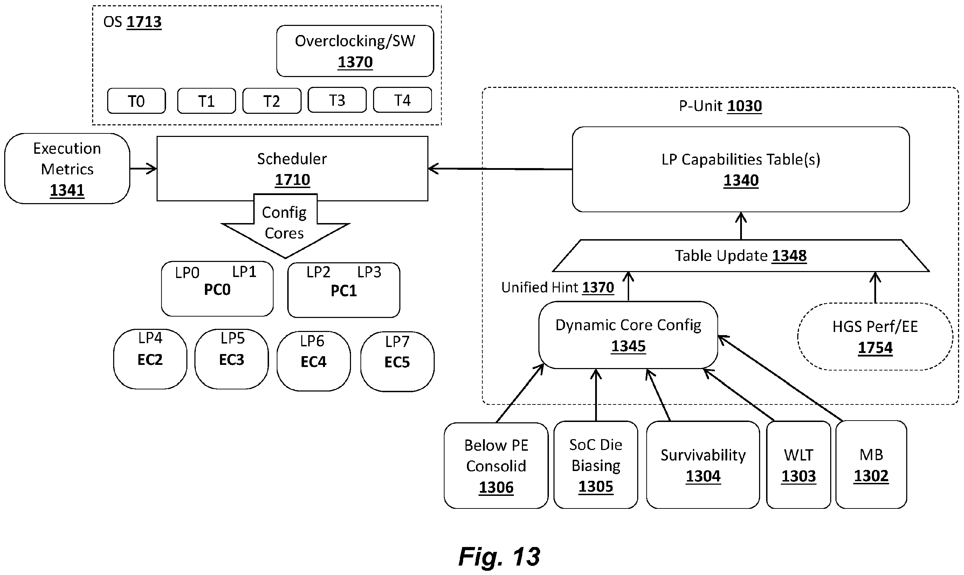

In the case of survivability, a parking hint may be generated regardless of whether WLT and/or other stages prior recommended core consolidation. This is required because for survivability, the OS should have the ability to restrict to a limited number of active cores. In some embodiments, survivability is incremental - gradually reducing the number of active cores. In one embodiment, the performance/EE projection is sorted and used to choose individual cores to park or consolidate. An example of the performance and EE projection data is shown in the logical processor capabilities table 1340 described below with respect to Figure 13.

In one embodiment, the following approach is taken. First, for survivability, the intent is to save power. As such, the cores are sorted starting with the highest performance and the top of the sorted list is used for parking.

With respect to workload type (WLT), for battery life/idle workload types, or no inference, the intent is to use the E-cores. As such, the cores are sorted starting with the highest efficiency values. The cores to contain/consolidate are then selected from the top of the sorted list.

With respect to a WLT of bursty/sustain, the intent is to use the highest performing cores. Consequently, the cores are sorted starting by performance with the highest performance at the top of the sorted list. Cores are then selected for parking from the bottom of the sorted list.

**Figure 13** illustrates one embodiment of a power management unit 2030 including dynamic core configuration logic 1345 for implementing the techniques described herein to resolve a plurality of parking/or and consolidation requests/hints 1302-1306. As mentioned, overclocking or other software 1370 may submit core parking hints to a mailbox 1302 to park or allocate a specific core or set of cores to a specific thread or set of threads (e.g., reserving specific core(s) for specific thread(s)). Other illustrated hints/requests include those related to below PE consolidation 1306, SoC die biasing 1305, survivability 1304, and workload type (WLT) parking 1303, various examples of which are provided herein.

In one embodiment, the dynamic core configuration logic 1345 resolves this combination of hints 1302-1306 into a unified core parking and/or core consolidation hint 1370. In addition, the hardware guide unit 814 (sometimes referred to as the hardware guide scheduler, HGS, or HGS+) continues to generate EE/Perf updates 854 as previously described with respect to Figure 8. In one implementation, the HGS/HGS+ functionality is encoded in the firmware 1135 executed by the SoC tile P-unit 2030.

In one embodiment, update logic 1348 updates the logical processor capabilities table 1340 based on the unified hint 1370 or the Perf/EE updates 854. In operation, the Perf/EE HGS hints 854 may be generated and populated locally. The dynamic core configuration logic 1345 consolidates and resolves the various features 1302-1306 attempting to independently override the HGS Hints 854. Once the resolution is complete, the unified parking/consolidation hint 1370 overrides the HGS updates 854 and the table update logic 1348 updates the logical processor capabilities table(s) 1340 (sometimes referred to as the hardware feedback interface or HFI table) in accordance with the unified hint 1370.

**TABLE C**

| EXAMPLE PROCESSOR: 1 Big Core, 8 Compute Die E-cores, 2 SoC Die E-Cores | | Slider Not Enabled Config | | |
|---|---|---|---|---|
| WLT | SoC Die Biased | Big Core | Compute E-Core | SoC E-Core |
| Bursty (PARK) | NA | 4 | 0 | 0 |
| Sustain (PARK) | NA | 4 | 8 | 2 |
| Idle (CONTAIN) | Y | 0 | 0 | 2 |
| Battery Life (CONTAIN) | Y | 0 | 0 | 2 |
| Battery Life/Idle (CONTAIN) *SoC Die E-Core Disable* | N | 0 | 2 | 0 |

Table C provides an example of a default core parking / containment for a particular processor having 1 Big Core , 8 Compute Die E-cores, and 2 SoC Die E-cores. In this implementation, for bursty WLTs, only Big cores are enabled. in the case of battery life (BL), either 2 SoC die E-Cores or two compute die E-cores are active based on SoC die biasing. For a sustain WLT, all cores are active and for an idle WLT, two SoC die E-cores are active.

Some embodiments described herein have a disaggregated processor architecture with DLVR support as well as both compute die E-cores and SoC die E-cores, which are more efficient at certain frequencies and system states. As such, SoC die biasing is used in some embodiments in which hints consolidate operations into the SoC die E-Cores, allowing the compute die cores to be powered down and conserving power.

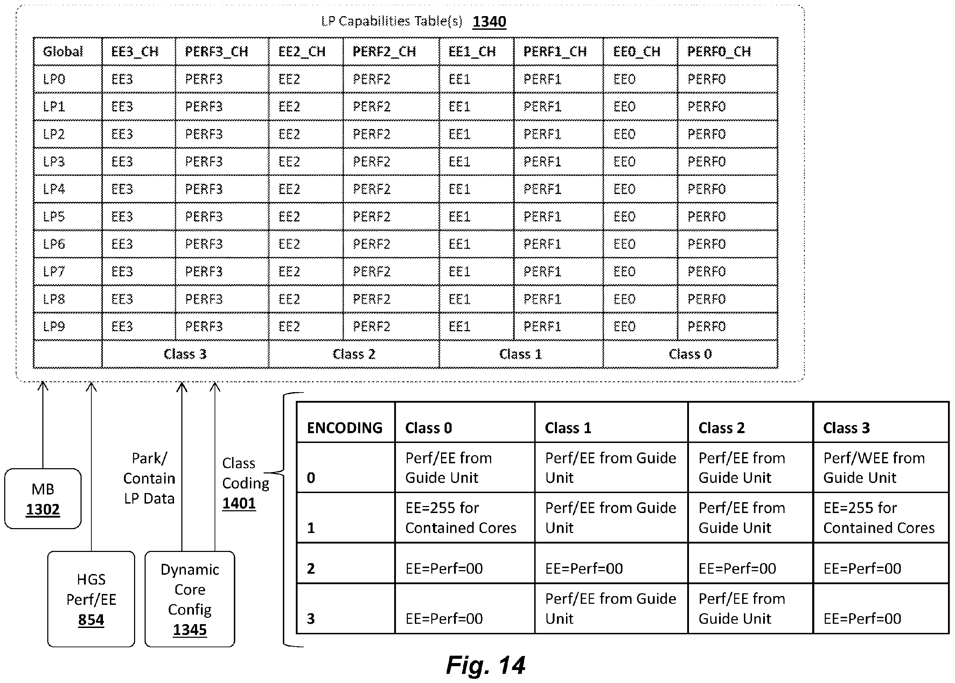

**Figure 14** illustrates an example set of EE/Perf data in a logical processor capabilities tables 1340 and different sets of class coding data 1401 indicating different combinations of Perf/EE values for different classes associated with LPs. In one implementation, the guide unit 814 determines the per-LP Perf/EE values to be populated to the capabilities tables 1340 which is updated accordingly.

These Perf/EE values may be overwritten by updates generated from the priority mailbox 1302 (e.g., originating from overclocking software or other forms of software operating at the appropriate privilege level), which may indicate thread-specific parking of one or more cores. In one embodiment, the dynamic core configuration logic 1345 determines the exact set of cores to be parked and/or contained based on the various inputs (e.g., the hints described above) and creates a compressed bitmap of overrides in accordance with the class coding 1401 (i.e., indicating the specific LP# and class to be updated based on the encoding).

The various techniques described above may be implemented (a) in P-code executed by one or more of the power management units (P-units), such as P-unit 2030; (b) using a combination of P-code and driver/kernel code (executed on a core); (c) in hardware; or (d) a combination of P-code, driver/kernel code, and hardware.

In one embodiment, the OS performs classifications of active workloads on the per-application level, averaging multiple seconds. These classifications are not directly tied to the dynamic hints generated by the dynamic core configuration logic 1345 or other processor entities.

As mentioned, the guide unit 814 determines per core capabilities (Perf/EE) at a class level granularity, as reflected in the Perf/EE data 854, using various factors such as the voltage/frequency curve, thermal data, core types, and the current operating point. These per core capabilities are exposed as hints to the OS at 16 ms intervals via the LP capabilities table(s) 1340 (aka, HFI table).

In one embodiment, the utilization and scalability associated with the cores is monitored at a significantly higher granularity than the speed at which hints are provided to the OS (e.g., 1 ms granularity compared to 16 ms for hints). In particular, core threshold detection logic detects when specified utilization thresholds are crossed within each 16ms interval. In response, one or more predefined exception patterns are detected (e.g., multi-threaded, low utilization, bursty, etc) in view of variables such as the frequency budget and WLT classifications.

In one implementation, specified thresholds are applied to determine if the current core count is in a desired range for the utilization and system scenario (e.g., such as bursty, battery life, sustain, and idle). If the core count is not within the desired range, recommended updates are generated which gradually provide hints based on the appropriate utilization level, along with the reasons associated with the hints. Operation may be scaled up or down at 16 ms intervals while keeping track of system scenarios and utilization targets.

Because reasons are provided along with the hints, the scheduler 810 learns when the parking/consolidation hint is done for PnP. As mentioned, the scheduler 810 may ignore hints when the running application needs multithreaded operation, even if it is at low utilization. This added communication to the scheduler 810 ensures that PnP will not be impacted for specific types of applications that behave differently. The exception will be a combination of utilization levels, workload types, and system frequency.

In one embodiment, a new "reason" bit is added to indicate that the parking hint is for PnP reasons. The scheduler 810 may then use this parking reason, for example, to ignore the hints for certain types of applications (e.g., such as the multithreaded applications required to run at low utilization levels).

With hybrid processor architectures, efficient scheduling is critical for compute performance. Existing scheduling techniques deliver reasonable performance on highly threaded, high load applications. In a processor such as a system-on-chip (SoC) with homogenous cores, temperature information collected by the processor can be exploited to optimize performance because cooler cores can generally achieve improved performance over warmer cores from the perspective of temperature constraints. However, for SoCs with hybrid processor cores, considering only core temperatures to determine which core can provide the best performance can lead to inefficient decisions and lower performance.

Embodiments of the invention include techniques for determining temperature-constrained performance capabilities of processor cores and communicating this information to a scheduler (e.g., an OS scheduler) to be used for performance-based workload scheduling. Temperature-based performance capability variations of the different types of cores exist for various reasons such as variations in manufacturing as well as the thermal characteristics of each workload. Some embodiments of the invention are configured to perform workload scheduling in view of these core/workload characteristics to make more efficient scheduling choices in response to temperature measurements.

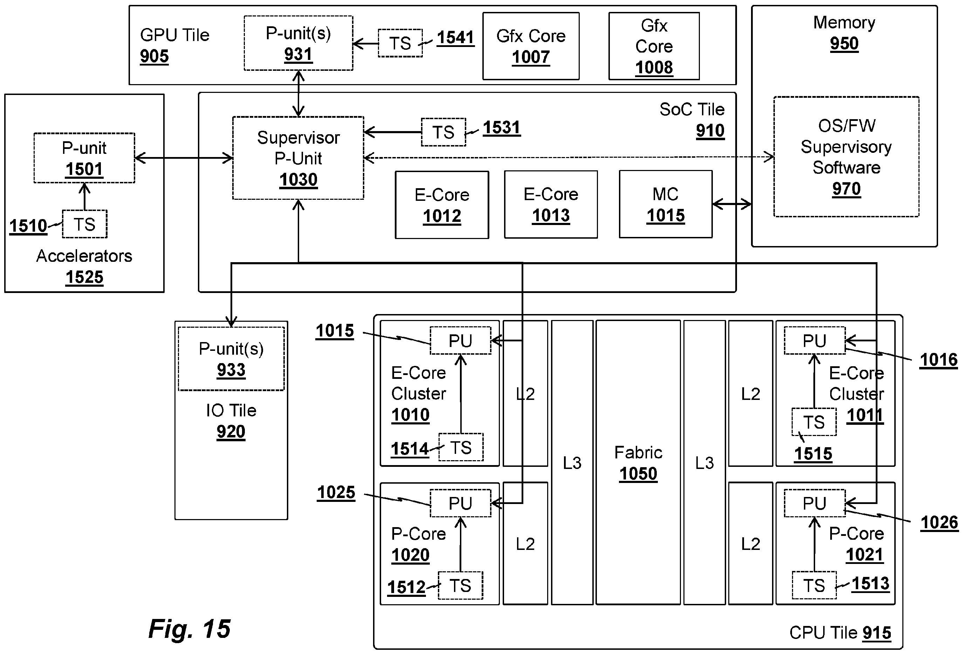

**Figure 15** illustrates an example SoC in which temperature sensors 1512-1513 associated with each P-core 1020-1021 and temperature sensors 1514-1515 associated with each E-core cluster 1010-1011, respectively, report temperature measurements to a corresponding local P-unit 1025-1026, 1015-1016. The local P-units 1025-1026, 1015-1016 may dynamically adjust local power consumption based on the temperature measurements and/or pass the temperature measurements to a supervisor P-unit 1030 (previously described with respect to Figure 10) which makes package-wide power management decisions based, at least in part, on the temperature measurements.

Similarly, a temperature sensor 1541 associated with GPU tile 905 reports temperature readings to local P-unit 931 and a temperature sensor 1551 associated with the accelerators 1525 reports its temperature readings to local P-unit 1501. Both P-units 931, 1501 may dynamically adjust local power consumption based on these measurements and/or send the temperature measurements to the supervisor P-unit 1030 for package-wide power management decisions. In the illustrated example, a temperature sensor 1561 on the SoC tile 910 reports temperature measurements directly to the supervisor P-unit.

It should be noted, however, that the underlying principles of the invention are not limited to a disaggregated architecture or the particular disaggregated architecture illustrated in Figure 15. Moreover, a hierarchical power management subsystem (e.g., with a supervisor P-unit and a plurality of local P-units) is not required for complying with the embodiments of the invention described herein.

For SoCs with hybrid processor cores, consideration of core temperatures alone for core selection can lead to ineffective decisions. Embodiments of the invention consider additional thermal and performance characteristics of each core or other IP block before making a task scheduling or migration decision - instead of simply deciding based on current temperature and thermal limits. The different thermal and performance characteristics of the different core types may be a result of the fabrication process used to produce the cores, the underlying core architectures, production variability, and potentially other variables. In some cases, the performance of a core in response to changes in thermal conditions is linked to the power specifications of the processor in which the core resides. For example, certain types of cores are capable of maintaining a defined maximum frequency at relatively higher temperatures when they are included in processors with relatively larger power specifications (e.g., 45W processor as opposed to a 15W processor).

By way of example, and not limitation, a first type of core ("type 1" core) may provide higher achievable performance (frequency) than a second type of core ("type 2" core), but it has an additional leakage/power cost. As a result, the type 1 core can become less performant than the type 2 core under certain power/thermally constrained scenarios and/or in processors with different base power specifications. Because the thermal characteristics and the maximum performance capabilities of these types of cores differ, it is important to evaluate these factors when making task scheduling and migration decisions (rather simply deciding based on current temperature and thermal limits). In some embodiments described herein, the type 1 cores are ULT cores and the type 2 cores are XLT cores; however, the underlying principles of the invention are not limited to these specific core types.

Embodiments of the invention consider the above variables before scheduling or migrating tasks. In one implementation, when the type 1 core is integrated in a processor with a particular base power value (e.g., a SKU with a 45W base power specification), a type 1 core can still achieve a higher performance for certain workloads than a type 2 core even after hitting its transistor junction temperature (Tjmax) limit. However, when the type 1 core is integrated in a processor with a second, lower base power value (e.g., a SKU with, for example, a 28W or 15W base power specification), the type 1 core becomes less performing after hitting its Tjmax limit compared to a type 2 core under the same workloads.

In one embodiment, the temperature-constrained frequency of a core at its temperature limit is initially predicted. The performance of the core is then dynamically updated based on detected temperature changes and the core's resolved temperature-constrained frequency. This information is then provided to the scheduler so that it can optimally schedule tasks.

The temperature-constrained frequency of a core is dependent on many factors ranging from transistor layer to system cooling solutions. For example, transistors with different voltage/frequency characteristics can yield different temperature-constrained performance when operating at temperature limits. Mounting the same processor/SoC to systems with different cooling solution can also result in different temperature-constrained performance. In addition, workloads with different thermal characteristics will sometimes cause the processor/SoC to have different temperature-constrained performance.

Various techniques may be used to determine temperature-constrained frequencies. For example, one embodiment uses a constant value defined through offline calibration. Alternatively, or in addition, to accommodate the variation on the platform level, some embodiments define a set of choices associated with different platform configurations and choose one based on platform input at runtime. Alternatively, or additionally, the implementations described below perform runtime learning operations to predict the temperature-constrained frequency of a core based on observations of the behavior of the cores at runtime.

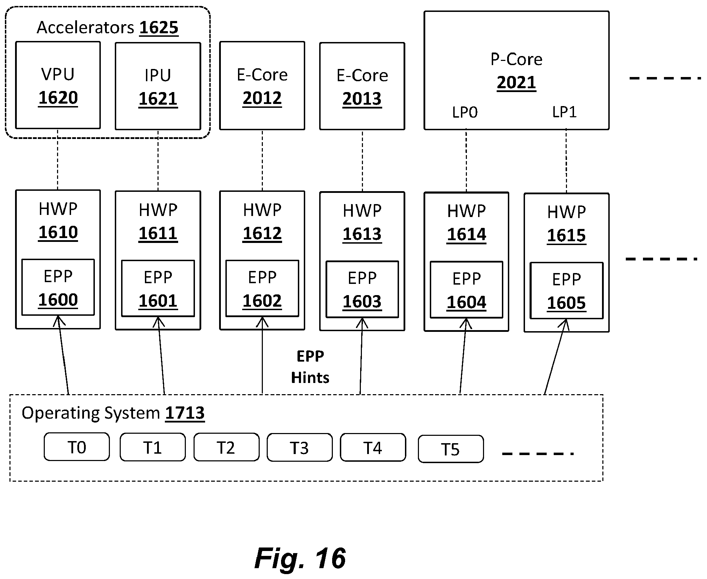

In some implementations, the relative priority for each of the logical processors/cores is inferred from energy performance preference (EPP) hints provided by the operating system for each task running in the system. Referring to Figure 16, in these embodiments, an energy performance preference "EPP" value 1600-1605 is set by the OS 1713 within registers 1610-1615 of the hardware P-state architecture (HWP). Each HWP register 1610-1615 is associated with a particular logical processor (LP). For example, HWP registers 1612-1613 are associated with LPs of E-cores 1712-1713, respectively, HWP registers 1614-1615 are associated with two respective LPs of P-core 1721, HWP register 1610 is associated with vector processing unit 1620, and HWP register 1611 is associated with infrastructure processing unit (IPU) 1621. In one embodiment, the HWP registers 1610-1615 are considered part of the power management subsystem and may be associated with one or more of the various power units described above (e.g., P-units 1730-1733). While a specific set of LPs are shown in **Figure 16** for the purpose of explanation, the underlying principles of the invention may be used with any type of LP (e.g., including LPs for CPU cores, graphics cores, and accelerator cores).

In one embodiment, the HWP registers 1610-1615 are 64-bit model specific registers (MSRs) and the EPP values 1600-1605 comprise 8-bit values stored within a specific range of bits within the MSRs (e.g., bits 31:24). In one particular implementation, the HWP registers 1610-1615 are separate instances of an IA32_HWP_REQUEST MSR, although the underlying principles of the invention are not limited to any particular register type.

In one implementation, when running a new task or set of tasks, the OS updates the corresponding EPP values (e.g., for the LPs used to execute the task(s)). The encoded EPP values 1600-1605 represent a scalar number from 0 - 255, with 0 indicating a preference to maximize performance for that task, and 255 indicating a preference to maximize energy efficiency. In some embodiments, the processor infers that the tasks that are biased the most toward performance are the highest priority tasks running on the LPs/cores. In some embodiments, when a particular IP block on the SoC is not assigned an EPP value (e.g., such as the graphics processor or media engine), these IP blocks are assigned a priority equal to the maximum priority of all of the other IP blocks in the system (e.g., the E-cores, P-cores, VPU, IPU).

Thus, the EPP values 1600-1605 provide a software notion of relative priority of each of the IP blocks. Embodiments of the invention use this information to allow software to adjust relative priority in order to optimize the user-perceived operating characteristics of the platform. To do this, these implementations rely on the notion of a relative priority input for the compute accelerators 1625. This relative priority indicator, sometimes referred to as "R weight", is a 6 bit value that encodes relative priority, with lower values indicating higher priority, and higher values representing lower priority. The R weight value may be stored in the HWP registers 1610-1615 or in one or more different power management registers.

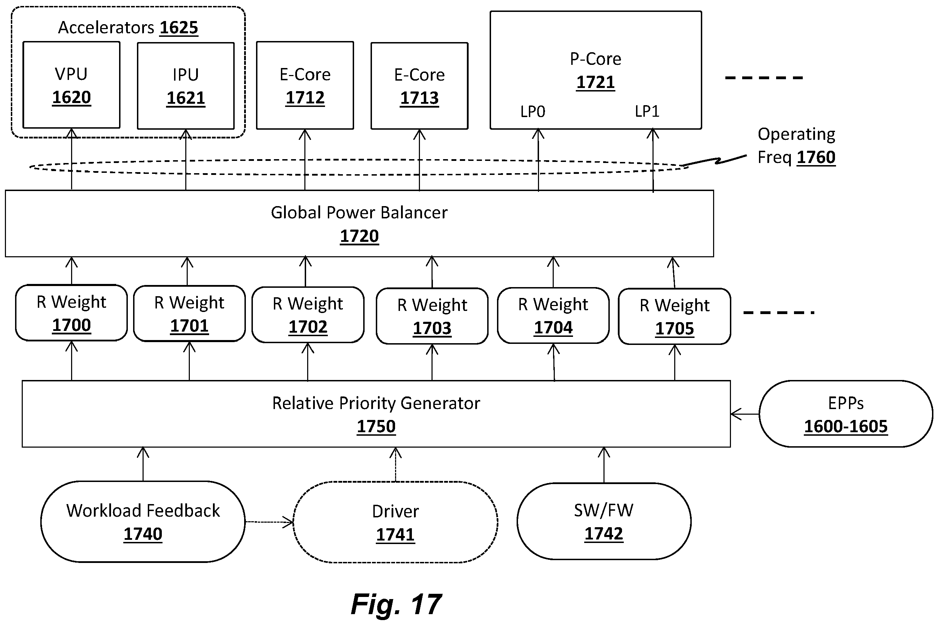

As illustrated in Figure 17, in one embodiment, a relative priority generator 1750 generates the R weight values 1700-1705 for corresponding IP blocks 1620-1621, 1712-1713, 1721 based on the corresponding EPP values 1600-1605 and software/firmware programming 1742. The R weight values 1700-1705 may be programmed statically (e.g., during the boot process) or dynamically based on workload feedback 1740 (e.g., indicating the types of workloads being executed and/or based on the intended usage model for a given system). For example, for a computer system being sold for AI performance, the OEM may statically program the R weight value 1700 for the VPU 1620 such that it is prioritized over all other compute accelerators (e.g., assigning the VPU an R weight value of 0). The programming may be done via an API provided by the software/firmware 1742 or via other interfaces. Alternatively, or additionally, a power management driver 1741 may implement or access the relative priority generator 1750 to dynamically adjust the R weight values for different IP blocks at runtime, potentially using the workload feedback 1740 indicating the types of workloads being run (potentially in combination with input from the end user), to achieve the desired level of performance for each workload.

Once the available power budget is known, and the relative priorities 1700-1705 of each of the compute IPs has been determined, a global power balancer 1720 allocates the power budget to each of the individual IP blocks 1620-1621, 1712-1713, 1721 in the form of an allowable operating frequency 1760 (and/or voltage), such that the resulting performance is optimized based on the communicated priority information. For this purpose, note that the translation between power, frequency, and performance is likely different for each of the compute IPs, and is not linear across the operating range. In general, performance of an IP is linearly proportional to IP block's operating frequency, but power consumption scales quadratically with operating frequency. Thus, one embodiment of the global power balancer 1720 is programmed with voltage-frequency tables and other power-related data for each of the IP blocks 1620-1621, 1712-1713, 1721.

In one embodiment, such as in a disaggregated architecture, the relative priority generator 1750 and global power balancer 1720 are implemented in the supervisor P-unit 1030 in the SoC tile 1010. The resulting frequency/voltage allocations 1760 are then communicated to other P-units 1031-1033 which apply the frequency allocations to their local IP blocks (e.g., P-unit 1032 on CPU tile 1015 for controlling the local P-cores and E-cores).

APPARATUS AND METHOD FOR WORKLOAD, POWER, AND PERFORMANCE-AWARE DYNAMIC CORE FREQUENCY RAMP RATE

Existing core frequency scaling algorithms are a function of core activity, the energy performance preference (EPP) values for each application thread, and the SoC power budget available for each core. The algorithm runs periodically and estimates the optimal core frequency based on the above inputs and ramps the core to the target frequency.

Existing solutions use a fixed ramp rate for core frequency changes across applications and system modes. In systems with fixed core frequency ramp rates, a foreground application that has critical performance requirements experiences a similar core frequency ramp delay as a background maintenance application that is not latency sensitive. As another example, a portable system connected to wall power burns similar core power compared to when it is running from battery power and nearly running out of charge for a given application with fixed target core frequency. These systems therefore choose ramp rates to balance between different types and priorities of applications and between the two extremes of system modes - performance vs. power. The chosen fixed ramp rate thereby leaves performance and power on the table.

To address these problems, embodiments of the invention dynamically select a core frequency ramp rate based on a number of variables including, but not limited to, workload type, power, and the performance requirements of the system. In particular, core frequency is increased at different ramp rates for different sets of applications and system modes. Higher ramp rates provide better responsiveness at the cost of power while slower ramp rates save power at the cost of performance and/or responsiveness. The embodiments described herein dynamically change the core frequency ramp rate at runtime as a function of different variables including, but not limited to, the workload type and the specified energy performance preference (EPP) of the system.

By way of example, and not limitation, ramping up core frequency faster when a portable system is connected to wall power provides high performance and better responsiveness. Slowing down the core frequency ramp rate when the same system is on battery power helps prolong battery usage. Further slowdown of the core frequency ramp rate when the system is running out of battery power avoids system shutdown. Similarly, a foreground application that is critical to user experience and responsiveness will benefit from sharp core ramp rates. In contrast, background applications that are not latency sensitive can use slower core ramp rates, conserving system energy. In addition, a given application benefits from different ramp rates for its different phases throughout execution. Application load times benefit from fast ramp rates for responsiveness, while idle or low activity phases of the same application can save power with slower ramp rates. A phase of sustained activity in the same application could balance power and performance with moderate ramp rates. The embodiments of the invention vary core frequency ramp rates in the middle of workloads with changes in corresponding phases to provide an improved tradeoff between power and performance.

Dynamic voltage and frequency scaling (DVFS) is a longestablished technique to balance performance with power savings and energy efficiency. The core frequency selection process plays a pivotal role in achieving a balance between performance and power across a plethora of applications supported on modern devices. The set of operations which determine core frequency run periodically and adjust the core frequency as a function of core activity levels, energy performance preferences (EPPs), and the available SoC power budget. Some hysteresis is provided to prevent oscillations in core frequency.

The power and performance impact of various core ramp rates were evaluated for a wide range of applications. Figures 16A and 16B plot the impact on application performance and power savings, respectively, achieved by limiting the ramp rate of core frequency. The power and performance impact numbers are relative to that of unlimited core frequency ramp rate, as implemented in existing processors.

Figures 16A-B plot the data for core frequency ramp rate limited to 1, 2, 3, and 5 bins per millisecond. A "bin", as used herein, refers to a selected value causing a corresponding change in core frequency. In some instances, for example, the core frequency can be reduced by 1/N of a "bin frequency" where the bin frequency corresponds to a smallest multiple by which a core frequency can be updated. In some embodiments this bin frequency can be an integer multiple of a bus clock frequency, although the scope of the embodiments described here are not limited in this regard. is increased.

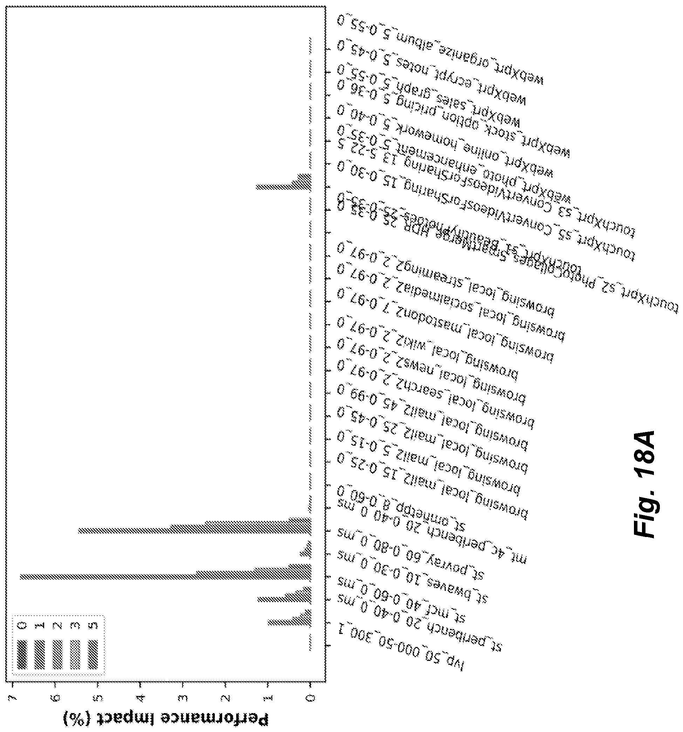

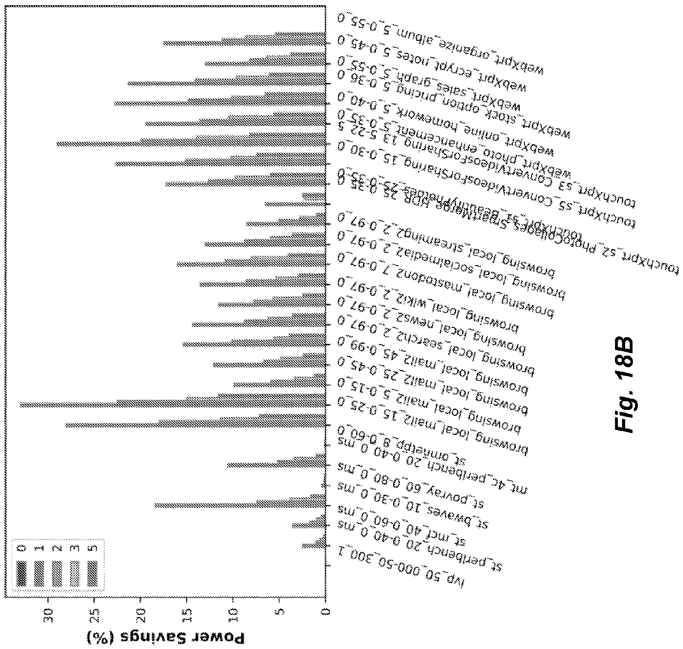

It can be seen that different applications have a different sensitivity to core ramp rate. Certain applications from the test suite show a high sensitivity to core ramp rate as these applications may have multiple phases where the core transitions from low to high frequencies. Slowing down each transition has a higher impact compared to other applications that are more stable throughout execution. In addition, applications with bursts of activity embedded in middle of large idle phases, such as Browsing and WebXprt significantly improve power savings (Figure 18B) while having no visible impact on performance (Figure 18A).

Consequently, a fixed ramp rate for core frequency across all types of applications leaves power and/or performance on the table. For example, the data shows that using a fixed 5bins/msec of ramp rate helps Bwaves performance but hurts Browsing power consumption. In contrast, limiting the ramp rate to 1bin/msec helps save power for Browsing but hurts Bwaves performance significantly.

Embodiments of the invention incorporate a workload-based dynamic core frequency ramp rate that can be modified at runtime based, at least in part, on the application or workload type that is being executed on a given core. Some implementations categorize workloads based on the type of activity. Table D shows an example classification for a set of workloads. Video conferencing and video streaming/playback workloads are classified as battery life (BL) workloads as they do not benefit from higher core frequencies. Idle (ID) workloads similarly do not benefit from higher core frequencies. Consequently, slower ramp rates may be implemented for occasional frequency ramps. Application workloads such as video editing and video recording are classified as bursty (BU) workloads, meaning that they may periodically demand higher core performance. Gaming workloads (including gaming + videoconferencing workloads) are classified as sustained (SU), meaning that they demand continuous high performance. Both bursty and sustained workloads benefit from higher core frequencies. While sustained applications benefit from relatively slower core frequency ramp rates (as performance impact of the initial phase is amortized over time), bursty applications may require faster ramp rates to improve responsiveness to periodic bursts of high performance work.

**TABLE D**

| System Scenario | Workload Type |
|---|---|
| Video Conference | BL |
| Video Streaming (Network) / Playback (HD) | BL |
| Video Editing | BU |
| Video Record | BU |
| Gaming | SU |
| Gaming + Video Conference | SU |
| Inferencing | BL |
| Idle | ID |

Additionally, application types may vary over time, based on changes in the application's workload activity. For example, an application may be classified as bursty during its load time but may be treated as idle for low activity phases after the initial load and sustained during the phases where its activity stays constant for longer durations. The embodiments of the invention dynamically monitor and reclassify application workloads based on detected workload activity. These embodiments also change the core ramp rate dynamically, in accordance with the detected changes to the application's workload characteristics to achieve better power and performance trade-offs.

Applications classified as bursty and sustained that benefit from fast core ramp rates might need to compromise on performance when a system is in power savings mode. In these cases, it is beneficial to slow down the core ramp rate with some performance loss in order to improve battery usage. Consequently, in some embodiments, the core frequency ramp rate is a function of power and performance needs of the system in addition to the workload type. Embodiments of the invention aid in optimizing performance while not compromising on energy efficiency of the system for all types of applications/workloads.

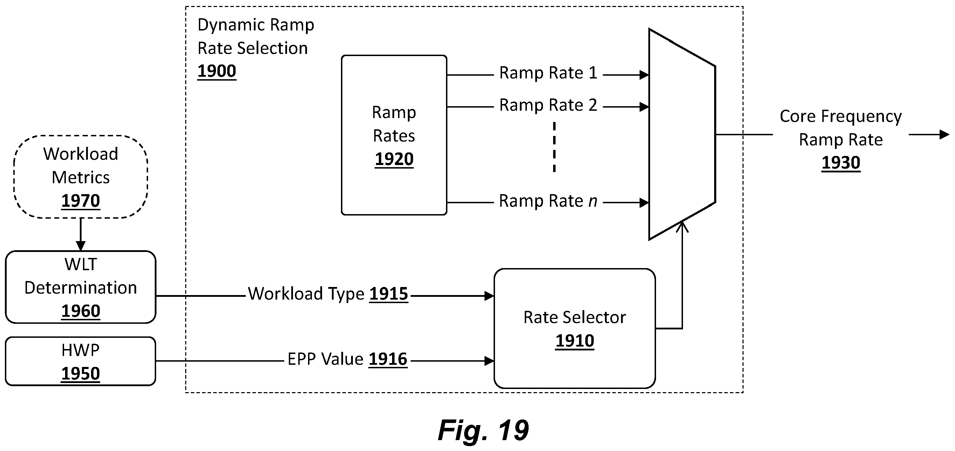

**Figure 19** illustrates dynamic core frequency ramp rate selection logic 1900 in accordance with one or more embodiments of the invention. Workload type determination logic 1960 determines the workload type 1915 for an application executing on the core by evaluating workload metrics 1970 associated with the application. An EPP value 1916 is set in a corresponding HWP register 1950 by the OS or other supervisory software.

Based on the workload type 1915 and EPP value 1916, a rate selector 1910 selects a core frequency ramp rate 1930 for a corresponding core, which may be selected from a set of possible ramp rates 1920. In some implementations, the ramp rates 1920 may be stored in a table or other data structure associated with the dynamic ramp rate selection logic 1900.

Thus, this embodiment of the invention takes workload type 1915 and energy performance preference 1916 of the system as inputs and selects the optimal core frequency ramp rate 1930 dynamically at run time. Ramp rates for each scenario - i.e., each combination of workload and energy-performance preference - are provided as a tunable knobs that can be fine-tuned on silicon to better balance between performance and power for each application and system mode. In some embodiments, the core frequency ramp rate 1930 is specified in units of frequency bins/msec.

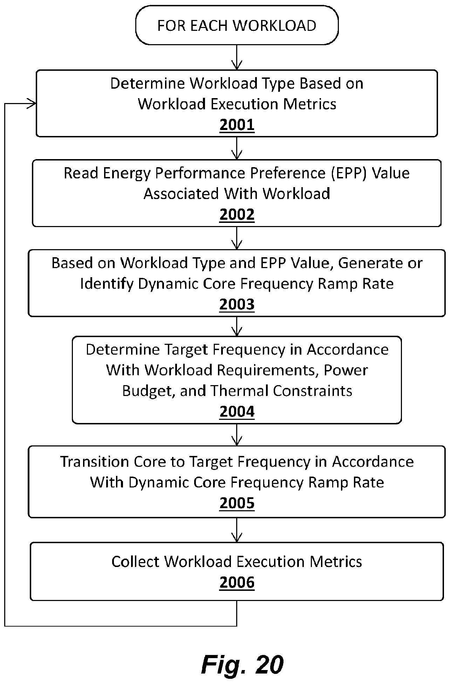

A method for dynamic core ramp rate selection is illustrated in Figure 20. The method may be implemented on the various architectures described herein, but is not limited to any particular processor or system architecture.

At 2001, the workload type of an application (or a workload of the application) is determined based on collected workload execution metrics. For example, based on the execution metrics, the workload may be categorized a battery life (BL) workload, an idle (ID) workload, a bursty (BU) workload, or a sustained (SU) workload as described above.

At 2002, the energy performance preference (EPP) value associated with the workload is read (e.g., from an HWP register). As mentioned, the EPP value may be set by the OS or other supervisory software.

At 2003, based on the workload type and EPP value, a dynamic core frequency ramp rate is generated or identified for the workload. In one embodiment, the ramp rate may be selected from a set of possible specified ramp rates.

At 2004, the target frequency of the core is determined based on variables including, but not limited to, workload requirements, the SoC power budget, and thermal constraints. Numerous variables are described above, for example, with respect to Figures 13-17.

At 2005, the core is transitioned to a target core frequency in accordance with the dynamic core frequency ramp rate. For example, if a frequency ramp rate of 2 bins/msec is specified, then the core frequency is increased in accordance with this value (e.g., increasing the core frequency by 2 bins each millisecond).

Once the target frequency is reached, workload execution metrics continue to be collected for the application at 2006. As mentioned, different frequency transition rates may be selected for different workloads within the same application, if those workloads have sufficiently different workload characteristics. Thus, the process returns to 2001 where the workload type is reevaluated based on the most recent workload execution metrics collected at 2006.

Embodiments of the invention provide significant benefits over existing implementations which ramp the frequency of all cores up to the target frequency in a single transition (e.g., from 1.0GHz to 5.0GHz). These embodiments differentiate between workloads for which a large, single transition ramping may be beneficial (e.g., applications that are latency sensitive) and those for which slower core ramp rates can be used, which reduce power consumption and do not result in a user-perceivable performance degradation.

APPARATUS AND METHOD TO CONTROL TEMPERATURE RAMP RATES INCLUDING TEMPERATURE SPIKE DETECTION AND CONTROL

Temperature rise/fall rates of > 30C/ms have recently been observed on certain processor nodes and will likely increase on future nodes. Two notable problems associated with these higher ramp rates are associated with temperature overshoot and temperaturedependent voltage correction. A temperature overshoot beyond the maximum supported operating temperature (the maximum thermal junction temperature, $T_{JMAX}$) can result in functional failures. Because the operating transistor voltage is a function of junction temperature, voltage correction for temperature can be challenging if the temperature is changing at a high rate. An incorrect voltage correction can lead to a functional failure.

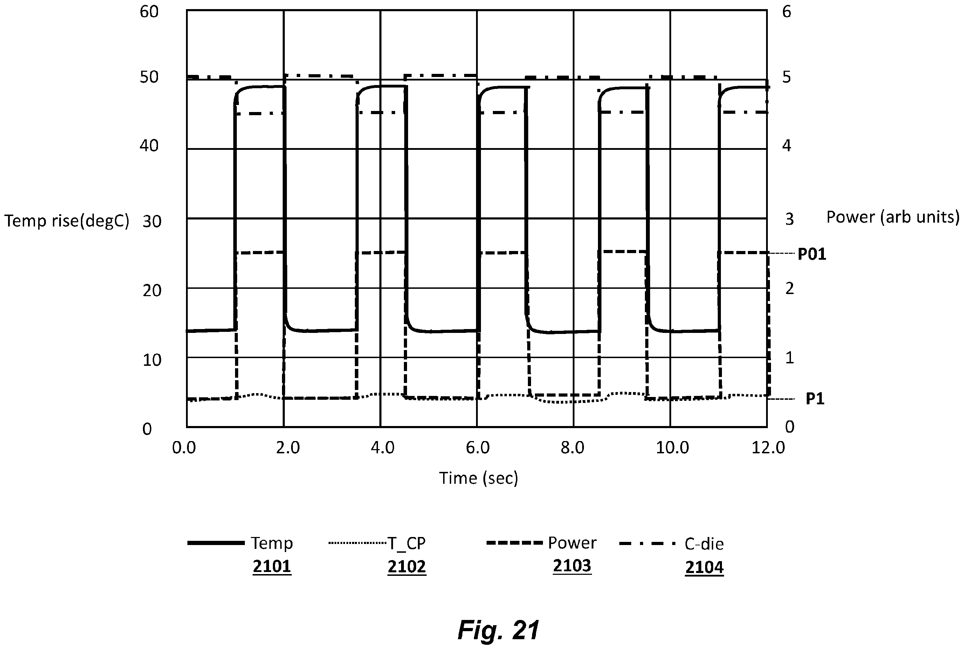

**Figure 21** plots core temperature 2101, as a function of core power change 2103. Also illustrated is the compute die power, C-Die 2104, and cold plate temperature, T_CP 2102. In this example, the core frequency is changed from the P1 P-state (sustained) frequency to the P01 P-state (turbo burst with 1 core) frequency. At the sustained frequency (P1), all cores are running while in the turbo scenario, only one core is running at P01 (turbo frequency) and the remaining cores are idle. Due to this behavior, the overall die power decreases in the single core scenario, but the single core power increases dramatically driving a very fast thermal transient, indicated by the sharp increase of temperature 2101.

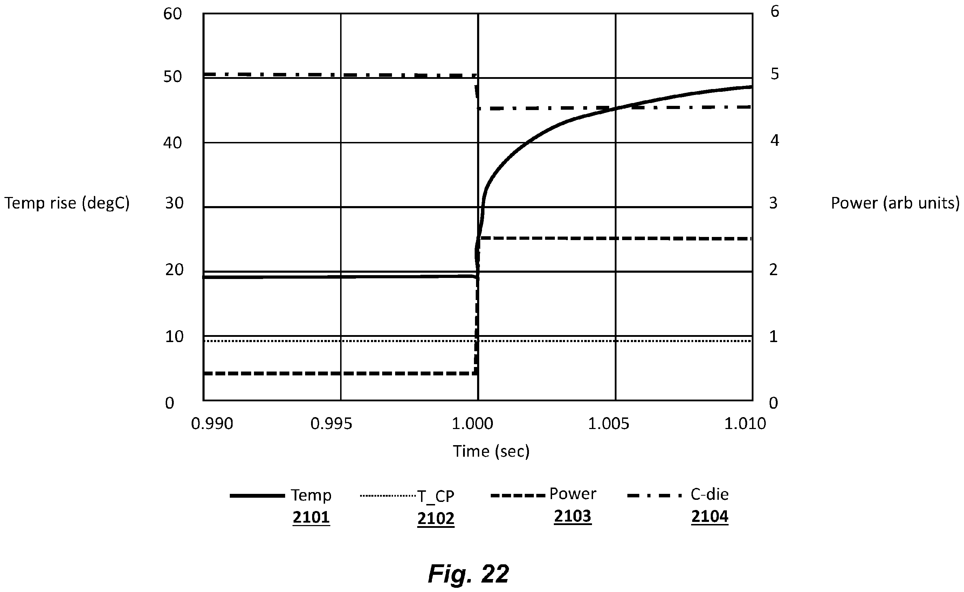

**Figure 22** provides greater details of the rate of change of core temperature 2101 immediately after the frequency (power) change 2103 (showing a 20ms interval). It can be seen in the plot that the temperature 2101 rises by approximately 18 degrees Celsius within the first millisecond.

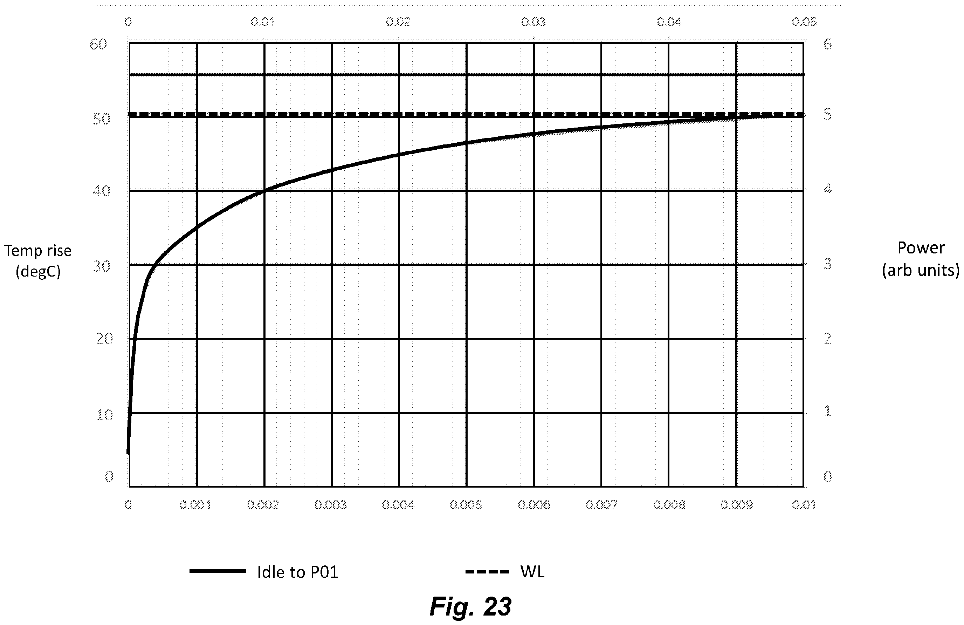

**Figure 23** illustrates a temperature change rate for a frequency transition from Idle to a maximum core frequency (e.g., a "turbo" or P01 frequency, or any frequency above the maximum sustained frequency, P1) for a particular workload (SPEC06) within a 10ms interval. In this example, the temperature increases by 30C in the first millisecond.

Using traditional control loops, managing temperature overshoots would require the on die digital thermal sensors (DTS) to operate at an elevated rate. By way of example, and not limitation, in a system in which six thermal sensors can be sensed within 100us, each sensor gets scanned every 100us. So, even with faster sensors, the temperature can change and overshoot by a few degrees for ramp rates greater than 30C/ms.

In addition to the initial fast transients caused by changing from idle to $F_{max}$, even small frequency changes require large power changes near $F_{max}$ and cause fast thermal transients. For example, a transition from the 2nd highest to the highest frequency can cause a large power step, which can again lead to temperatures rising at higher rates. The voltage differences for a frequency change are proportionately smaller at lower frequencies.

Thus, one of the underlying problems in existing implementations is that sharp increases in frequency causes corresponding increases in core/IP power consumption, which results in a sharp temperature rise.

Embodiments of the invention dynamically limit the rate at which the core frequency changes to manage temperature ramp rates and to prevent issues/failures due to high temperature ramp rates. The temperature changes described herein are directly related to core power consumption, and power is directly related to frequency/voltage combinations. Consequently, frequency ramp rate control is used in these embodiments as a proxy for power ramp rate control, thereby indirectly controlling the rate of temperature change. For example, the rate of temperature increase can be controlled to be within a few degrees increase per millisecond. The slower temperature rise time can be managed with existing processor components, obviating the need for shorter digital temperature sensor (DTS) scan times and reducing DTS power consumption - since the DTS scan time does not need to be continuously decreased. Some embodiments of the invention also apply voltage correction during the controlled ramp, mitigating the impact of a high guard-band.

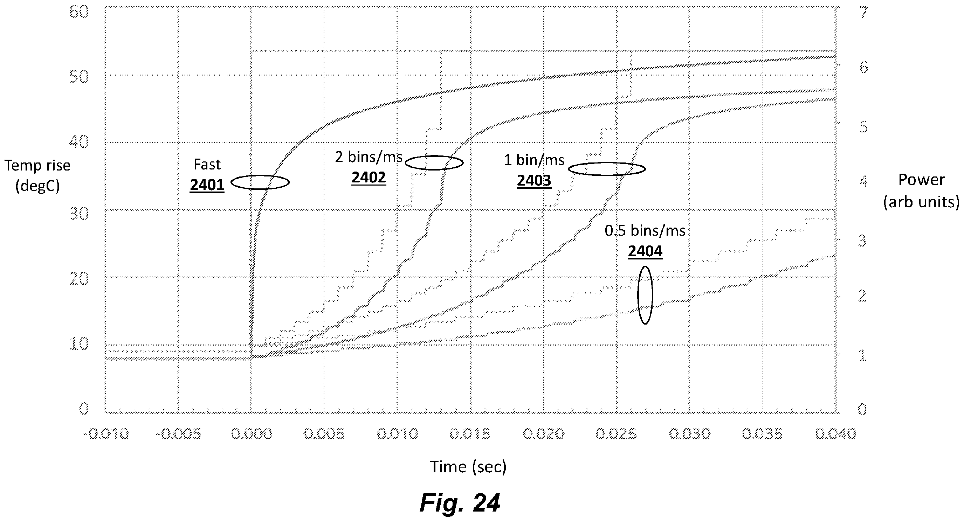

**Figure 24** illustrates an example set of results for different frequency ramp rates. In particular, results are shown for frequency ramp rates of instantaneous/fast 2401, 2 bins/ms 2402, 1 bin/ms 2403, and 0.5 bins/ms 2404. Each pair of lines represents the results for a corresponding ramp rate. The dotted line in each pair represents power consumption and the solid line represents the corresponding temperature. Each frequency "bin" in this implementation is equal to 100MHz, although the underlying principles of the invention are not limited to any particular frequency bin size. It is clear from this data that slower ramp rates significantly reduce the thermal transient response.

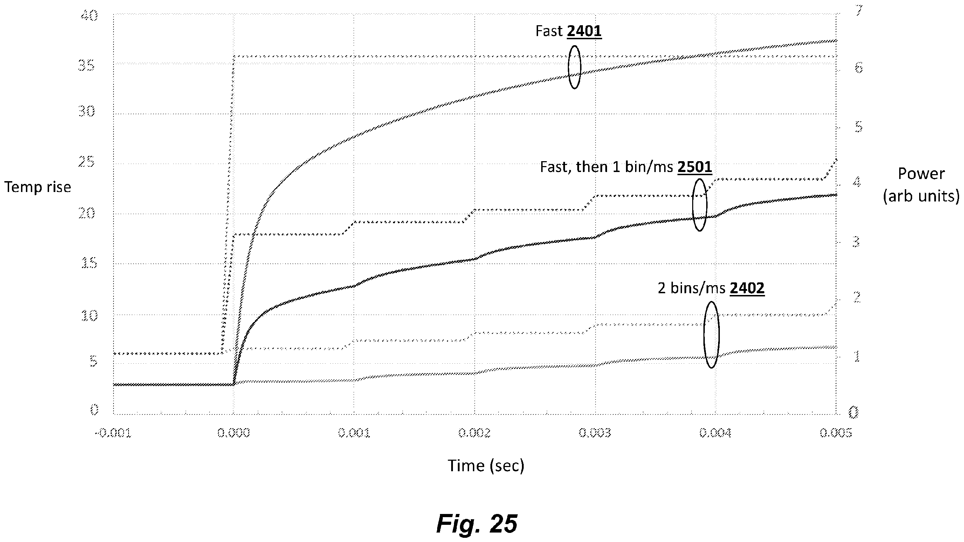

**Figure 25** shows temperature transient profiles when the frequency is raised to a first frequency in a single step and then applying frequency ramp control, as indicated by the two curves 2501 (i.e., where the dotted line indicates core power and the solid line represents temperature). This data is plotted alongside the fast ramp rate data 2401 and the 2 bins/ms data 2402 from **Figure 24** for comparison.

Table E shows the thermal response following a step to the first frequency and then 100MHz (1bin) per millisecond frequency change.

**TABLE E**

| Time after step (us) | 100 | 200 | 300 |
| --- | --- | --- | --- |
| Temperature Change (C) | 5 | 7 | 8 |

From the data shown in **Figures 24** and **25,** it is evident that controlling rate of change of frequency significantly reduces temperature ramp rates. From **Figure 24,** it can also be observed that the change of even 100Mhz at higher frequencies causes a significant change in temperature.

In some implementations, the power management subsystem implements autonomous power/frequency control and determines the target frequency of a core based on run time factors such as core utilization, workload type, etc. Examples of determining a target frequency are described above with respect to **Figures 13-14,** although the underlying principles of the invention are not limited to these implementations.

The autonomous control can result in a sudden high frequency selection for certain workloads, depending on current conditions. For example, if the core has sufficient thermal headroom, the power management unit may allow the core to transition from low to high frequency in single step as thermal limits were not the limiting factor for frequency determination.

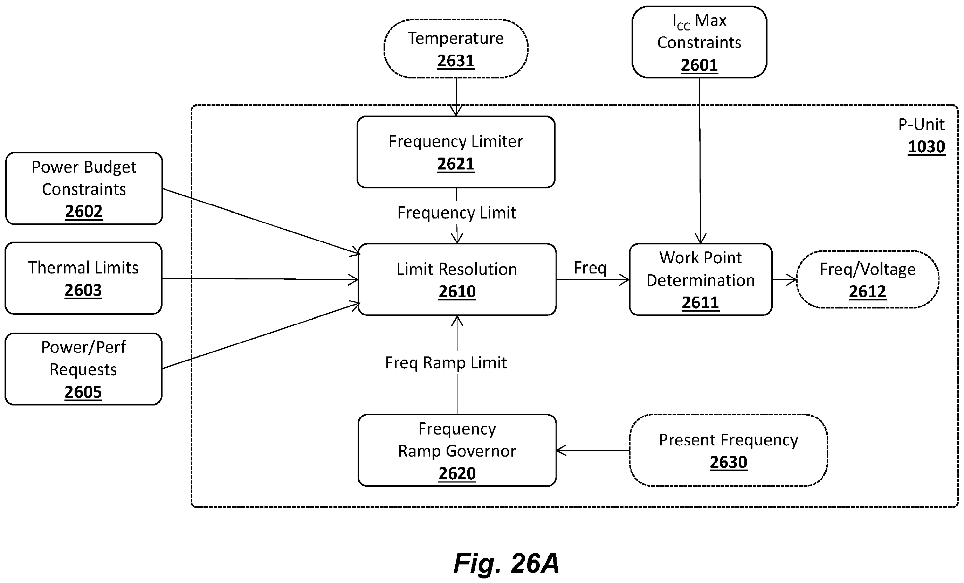

Referring to **Figure 26A,** a power management unit (P-unit) 1030 in accordance with embodiments of the invention includes a frequency ramp governor 2620 to control the rate of change of core frequency (and correspondingly, the rate of change of core power) based on the previous frequency 2630 and other variables described herein. A frequency limiter 2621 limits the maximum frequency as function of temperature (thereby limiting the maximum power dissipation). In one embodiment, limit resolution circuitry 2610 determines the frequency at which to run the core in accordance with these values (e.g., increasing frequency at the specified frequency ramp rate and limiting the maximum frequency to the specified limit).

In some implementations, the limit resolution circuitry 2610 makes the frequency determination in combination with one or more additional variables including, but not limited to, power budget constraints 2602 such as average power limits and maximum/virus power limits; thermal limits 2603 such as temperature thresholds and average temperature limits; and power/performance requests 2603 such as those submitted by IP blocks of the processor, the operating system, system-level components, and other entities (e.g., such as hardware P-state (HWP) requests). For example, the limit resolution circuitry 2610 may select the smallest frequency satisfying all of the specified constraints 2602-2605, as well as the frequency ramp limit provided by the frequency ramp governor 2620 and frequency limit provided by the frequency limiter 2621.

Work point determination circuitry 2611 specifies the frequency/voltage pair to be used for the core based on the frequency provided from the limit resolution circuitry 2610 and maximum current (Icc max) constraints 2601. For example, the work point determination circuitry 2611 may access a frequency/voltage table (or other data structure comprising a list of predetermined frequency/voltage combinations) using the frequency to identify the corresponding voltage, and may use the voltage/frequency combination 2612 as long as it is in accordance with the maximum current constraints 2601.

In one embodiment, the power management unit 1030 enforces the ramp rates as shown in table F below. In particular, the frequency ramp governor 2620 may use a ramp rate table (or other data structure) such as Table F to determine the frequency ramp rate limit.

**TABLE F**

| Frequency Zone | Frequency Limits | Ramp Rate |
| --- | --- | --- |
| Zone-0 | <= SAFE_FREQUENCY | Unlimited |
| Zone-1 | ( current_frequency > SAFE_FREQUENCY and current_frequency <= ZONE_1_FREQ_LIMIT) | ZONE 1 FREQ RAMP RATE |
| Zone-2 | ( current_frequency > ZONE_1_FREQ_LIMIT and current_ frequency <= ZONE_2_FREQ_LIMIT) | ZONE 2 FREQ RAMP RATE |
| Zone-3 | current_frequency > ZONE_2_FREQ_LIMIT (till max supported frequency) | ZONE 3 FREQ RAMP RATE |

In this example, a set of zones (Zone 0-3) are specified based on frequency limits corresponding to different ramp rates (e.g., Zone 1 Freq Ramp Rate, Zone 2 Freq Ramp Rate, etc). Different SoCs may be configured with different numbers of zones and using different frequency limits than those shown here. The number of frequency zones may be determined based on the thermal response profile of the processor/SoC.

Each zone is associated with a different frequency ramp rate as indicated in the rightmost column of Table G. The ramp rate for the first zone (Zone 0) is unlimited because it is within the "safe" frequency limit. Thus, each zone can have different ramp rates to control the rate of change of temperature.

As described above with respect to **Figure 24,** the temperature of the core can rise very fast for even 100MHz frequency changes at higher frequencies. To prevent overshoot and potential thermal runaway issues, the frequency limiter 2621 determines the highest allowed frequency as a function of temperature 2631. An example of the temperature-frequency mapping is provided in Table G below. Note, however, that this mapping may be different for different SoCs/processors.

**TABLE G**

| Operating Temperature | Maximum Frequency Allowed |
|---|---|
| Temperature <= TEMPERATRE_THRESHOLD0 | MAX_FREQUENCY |
| (Temperature > TEMPERATRE_THRESHOLD0) and (Temperature <= TEMPERATRE_THRESHOLD1) | MAX_FREQUENCY - TEMP_ THRESHOLD0_DOWNSTEP |
| (Temperature > TEMPERATRE_THRESHOLD1) and (Temperature <= TEMPERATRE_THRESHOLD2) | MAX_FREQUENCY - TEMP_ THRESHOLD1_DOWNSTEP |
| (Temperature > TEMPERATRE_THRESHOLD2) | MAX_FREQUENCY - TEMP_ THRESHOLD2_DOWNSTEP |

In this example, when the temperature is below a first temperature threshold (temperature threshold 0), the maximum supported frequency of the core is permitted. When the temperature rises above temperature threshold 0, the maximum supported frequency is reduced by a temperature downstep value (temp_ threshold0_downstep). As the temperature increases above a second threshold (temperature threshold 1) another downstep value may be used (temp_threshold1_downstep), to further reduce the maximum frequency (e.g., the new downstep is larger than the first downstep). Above a third temperature threshold (temperature threshold 2), another downstep value is used (temp_threshold2_ downstep) to further reduce the maximum frequency. As mentioned, however, the number of temperature thresholds and the corresponding downstep values are based on the thermal response profile of the SoC/processor.

In the embodiments described with respect to Figure 26A, frequency limits and frequency ramp limits are used as a proxy for power, which is directly responsible for the core temperature changes (i.e., increases in frequency cause corresponding increases in core/IP power consumption, which causes the temperature rise). Instead of, or in addition to, using frequency to control temperature, some embodiments monitor and control power limits and power ramp rates for temperature control.

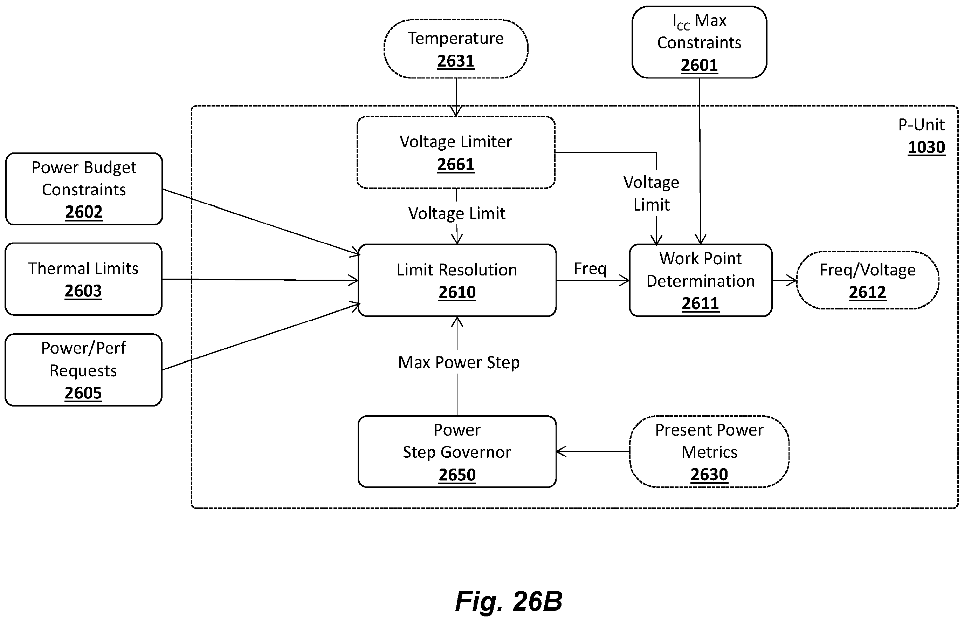

**Figure 26B** illustrates one embodiment in which a power step governor 2650 controls the power ramp rate in accordance with present power metrics 2630. In particular, to limit the temperature rise rate, the power step governor 2650 controls the power step directly, based on present power metrics 2630, rather than using frequency as a proxy for power. The power metrics 2630 may include measured or estimated power. For example, in one embodiment, current is multiplied by the voltage to determine the present power consumption of the core or IP block. Moreover, the current value can be determined as the sum of the dynamic current and the leakage current. Additional power metrics 2630 which may be used by the include, but are not limited to, the average power over a period of time or clock cycles, virus (worst case) power, and/or a summation of the energy cost for each instruction executed. It should be noted, however, that the underlying principles of the invention are not limited to any particular types of power metrics 2630.

In one embodiment, the power management unit 1030 enforces the power step rates as shown in table H below. In particular, the power step governor 2520 may use a power step rate table (or other data structure) such as Table H to determine the power step rate limit.

**TABLE H**

| Power Zone | Power Limits | Ramp Rate |
|---|---|---|
| Zone-0 | <= SAFE_POWER | Unlimited |
| Zone-1 | ( current_power > SAFE_POWER and current_power <= ZONE_ 1_POWER_LIMIT) | ZONE 1 POWER STEP RATE |
| Zone-2 | ( current_power > ZONE_1_POWER_LIMIT and current_power <= ZONE_ 2_POWER_LIMIT) | ZONE 2 POWER STEP RATE |
| Zone-3 | current_power > ZONE_2_POWER_LIMIT (till max supported power) | ZONE 3 POWER STEP RATE |

In these embodiments, the power step governor 2650 uses the present power metrics 2630 as a baseline (e.g., the current power level calculated/measured using various techniques). Based on a desired temperature rise rate limit and the present power metrics 2630, the power step governor 2650 determines the maximum power step deemed safe.

In one embodiment, the limit resolution circuitry 2610 determines the maximum frequency which can be allowed for the maximum power step provided by the power step governor 2650. For example, for a given maximum power step, the limit resolution circuitry 2610 determines the maximum permitted frequency/voltage step. It may be determined at this stage that the power increase is driven by a change in dynamic capacitance (Cdyn) and that the frequency is already too high, resulting in a reduced frequency communicated by the limit resolution circuitry 2610.

Alternatively, or in addition, the limit resolution circuitry 2610 may determine the maximum power step which can be allowed, which it communicates to the work point determination circuitry 2611. In other implementations, the maximum power step generated by the power step governor 2650 may be provided directly to the work point determination circuitry 2611.

The work point determination circuitry 2611 then specifies the frequency/voltage pair to be used for the core or other IP block based on the maximum frequency or maximum power step provided from the limit resolution circuitry 2610 or power step governor 2650 and maximum current (Icc max) constraints 2601.

The work point determination circuitry 2611 may access a frequency/voltage/power table or other data structure comprising a list of predetermined frequency/voltage/power combinations to identify the voltage corresponding to the maximum frequency or the voltage/frequency pair corresponding to the maximum power, and may use the voltage/frequency combination 2612 as long as it is in accordance with the maximum current constraints 2601. Once the frequency/voltage 2612 is determined, the power management unit 1030 operates as described above with respect to **Figure 26A.**

In some embodiments, a voltage limiter 2710 can also be used to prevent overshoot and potential thermal runaway at high voltage/frequency operation. As shown in **Figure 26B,** the voltage limit may be used by the limit resolution circuitry 2610 when determining the frequency of operation and/or by the work point determination circuitry 2611 when selecting the frequency/voltage operating point 2612. To prevent overshoot, maximum operating voltage can be limited to be a function of temperature 2631, as indicated in Table I.

**TABLE I**

| Operating Temperature | Maximum Voltage Allowed |
|---|---|
| Temperature <= TEMPERATRE_THRESHOLD0 | MAX_VOLTAGE |
| (Temperature > TEMPERATRE_THRESHOLD0) and (Temperature <= TEMPERATRE_THRESHOLD1) | MAX_VOLTAGE_ABOVE_THRESHOLD0 |
| (Temperature > TEMPERATRE_THRESHOLD1) and (Temperature <= TEMPERATRE_THRESHOLD2) | MAX_VOLTAGE_ABOVE_THRESHOLD1 |
| (Temperature > TEMPERATRE_THRESHOLD2) | MAX_VOLTAGE_ABOVE_THRESHOLD2 |

The number of temperature thresholds is determined based on the thermal response profile of the IP. As the temperature increases (higher threshold), the MAX voltage limit would be lower.

The case temperature ($T_{case}$) also influences the maximum silicon temperature and therefore can influence the processor maximum temperature and/or temperature rise rate. To manage the process temperature, and prevent overshoot, some embodiments of the invention limit the core/IP frequency as a function of case temperature. For example, in Figures 26A-B, the case temperature may be used by the limit resolution circuitry 2610 (e.g., in addition to frequency and/or voltage limit) to determine the frequency. The case temperature can be measured, or it can be predicted based on the processor (silicon) temperature and a transfer function which models the platform thermal solution capacity. The platform case temperature model can be a real/complex mode, a simplified approximation of it (e.g. curve fitting based model), and/or a machine learning based mode.

When performing P-state transitions as described herein, the end temperature is expected to be significantly higher than the present temperature. Before performing the transition, work point determination circuitry 2611 implements a voltage correction fix to calculate the voltage correction for the worst-case possible temperature (highest or lowest) and reflect this voltage in the determined frequency/voltage 2612 for the core. Once the transition is complete, the correct voltage will be calculated at the next control cycle.

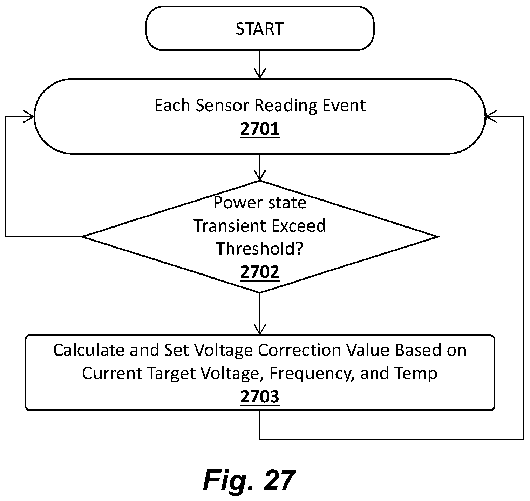

**Figure 27** illustrates a method for implementing the voltage correction in accordance with some embodiments of the invention. The temperature is read from each thermal sensor at 2701. If the P-state transient exceeds the specified threshold, determined at 2702, then the voltage correction value is calculated and set at 2703 based on the current target voltage, frequency, and temperature.

Some of the embodiments described above use fixed thresholds, such as those set forth in Tables F-H. In some embodiments of the invention, these thresholds are changed dynamically as function of workload. For example, one set of thresholds may be used for idle or battery life workloads while another set of thresholds may be used for bursty or sustained workloads. In some implementations, machine learning is used to determine the workload type for the workload currently being executed. Based on the workload type, the thresholds are automatically adjusted to provide an improved efficiency and performance response.

APPARATUS AND METHOD FOR THERMAL SPIKE DETECTOR AND SPIKE CONTROL LOGIC

In certain implementations, a thermal spike corner case (e.g., 50C/msec temperature ramp rate) may arise due to high frequency operation which is not detected and controlled by existing solutions, resulting in system failure.

Embodiments of the invention include a robust design solution to gain control smoothly, before this issue occurs, using digital thermal sensors (DTS). Existing DTSs are responsible for taking temperature measurements across the die and passing these temperature measurements to power management agents (e.g., P-unit 1030 described above) which use the temperature measurements when making voltage/frequency work point decisions and flagging catastrophic overheating events.

There are three key outputs from the DTS that the PM agents use to make these decisions: (1) Temperature measurement data stored in control registers; (2) o_dtd_nsalert, which is asserted when the measured temperature is over/under a specified threshold; and (3) o_thermtrip, which is asserted when a catastrophic thermal event is detected.

Embodiments of the invention includes additional capabilities including a temperature slope calculated from temperature samples over the diode read time along with the current capabilities. With the temperature and the temperature slope information, thermal spike corner cases can be avoided. In particular, these embodiments predict and make more efficient work point decisions instead of making decisions based on instantaneous temperature values.

In case of a thermal spike corner case, where the P-code/A-code is not fast enough to respond, embodiments of the invention include a hardware unit which instantaneously switches the core clock to a low frequency clocking to reduce the temperature and retain control of the system.

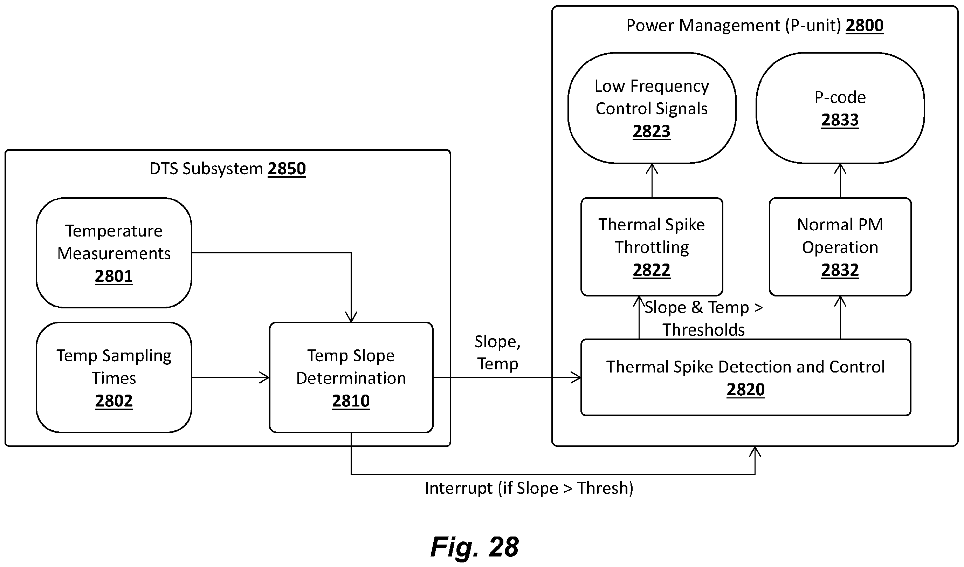

Referring to **Figure 28,** in one embodiment of the invention, the DTS subsystem makes a sequence of temperature measurements 2801 at specified temperature sampling times 2802. Based on these values, temperature slope determination logic 2810 calculates the temperature slope, which indicates how quickly the temperature is increasing or decreasing (e.g., temperature per unit of time). In one embodiment, if the slope is above a specified threshold (e.g., 25C/ms) and the temperature is above a temperature threshold (e.g., 100C), then the DTS subsystem 2850 may generate an interrupt to the power management unit/subsystem 2800.

In either case, the slope and current temperature are provided the power management unit 2800. Spike detection and control logic 2820 evaluates the slope and temperature. If the slope and temperature are both above the specified thresholds (e.g., 25C/ms and 100C, respectively), then thermal spike throttling circuitry 2822 generates a sequence of control signals 2823 to throttle the frequency down to a specified low frequency.

If the spike detection and control logic detects that the temperature is below the temperature threshold (e.g., 100C) or that the slope is below the slope threshold (e.g., 25C/ms), then normal power management operation 2832 is selected (e.g., executing P-code 2833 to perform power management operations). As used herein, the "normal" power management operation can include operations in accordance with the various embodiments described above, including (but not limited to) those described above with respect to Figures 13-27.

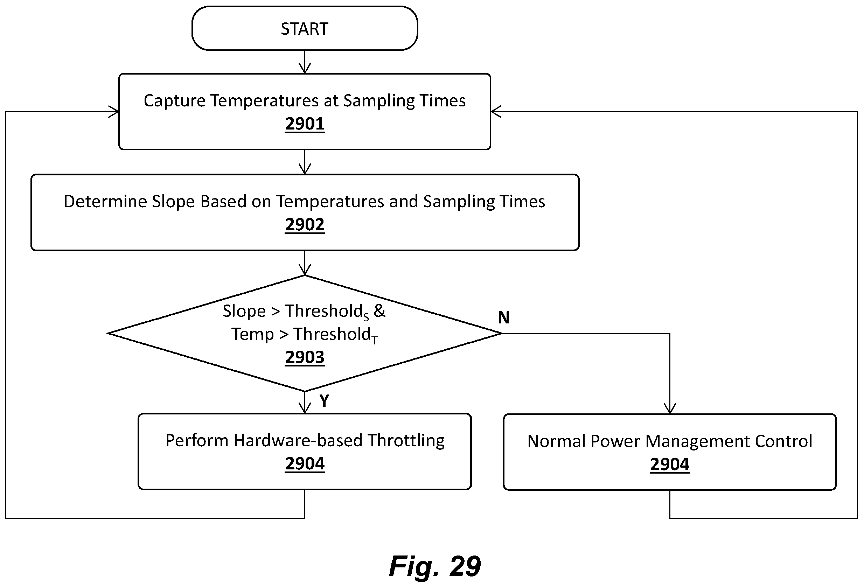

A method in accordance with one embodiment is illustrated in **Figure 29.** The method may be performed on the various architectures described above, but is not limited to any particular architecture.

At 2901, temperatures are captured at specified sampling times. At 2902, the temperature slope is determined based on the temperatures and the sampling times, indicating the speed at which temperature is changing (e.g., 10C/ms, -10C/ms, 30C/ms, etc). If the slope is greater than a specified threshold (e.g., 25C/ms) and the temperature is greater than a specified temperature threshold (e.g., 100C), then hardware-based throttling is performed at 2904. If the slope is less than the specified threshold or the temperature is less than the temperature threshold, then hardware-based throttling is not used, and normal power management operations are performed at 2905. As mentioned, "normal" power management may include the operations performed with respect to any of the embodiments described above (see, e.g., **Figures 13-27** and associated text).

The embodiments described herein handle thermal spikes more efficiently than existing implementations by triggering a hardware based throttling response.

In the foregoing specification, the embodiments of invention have been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

EXAMPLES

The following are example implementations of different embodiments of the invention.

Example 1. A processor comprising: a plurality of cores to execute instructions; and a power management unit to control power consumption of each core of the plurality of cores, the power management unit comprising: a frequency ramp governor to determine a frequency ramp rate limit for at least one core of the plurality of cores based, at least in part, on a present frequency of the core, a frequency limiter to determine a maximum frequency of the core based, at least in part, on a measured temperature, and limit resolution circuitry to determine a first frequency of the core in accordance with the frequency ramp rate limit and the maximum frequency.

Example 2. The processor of example 1 wherein the frequency ramp rate limit comprises a first frequency ramp rate limit if the present frequency of the core is above a first threshold and comprises a second frequency ramp rate limit if the present frequency of the core is below the first threshold, the first frequency ramp rate limit comprising a lower frequency ramp rate than the second frequency ramp rate limit.

Example 3. The processor of examples 1 or 2 wherein the frequency ramp rate governor is to determine the frequency ramp rate limit based on frequency ramp rate limit data comprising a plurality of frequency ranges mapped to a corresponding plurality of frequency ramp rate limits, the frequency ramp rate governor to determine the frequency ramp rate limit for the core based on the present frequency of the core falling within a corresponding frequency range of the plurality of frequency ranges.

Example 4. The processor of any of examples 1-3 wherein the frequency limiter is to determine the maximum frequency of the core based on temperature-frequency data comprising a plurality of temperature ranges mapped to a corresponding plurality of frequency downstep values, the frequency limiter to determine the maximum frequency of the core by identifying a first frequency downstep value associated with a first temperature range corresponding to the measured temperature, and subtracting the first frequency downstep value from a maximum supported frequency value.

Example 5. The processor of any of examples 1-4 wherein the limit resolution circuitry is to determine the first frequency of the core further based on one or more of power budget constraints, thermal limits, and one or more power/performance requests.

Example 6. The processor of any of examples 1-5 further comprising: work point determination circuitry to determine a voltage at which to operate the core in combination with the first frequency based on frequency-voltage data comprising a mapping of frequencies to voltages.

Example 7. The processor of any of examples 1-6 wherein the work point determination circuitry is to determine the voltage at which to operate the core further in accordance with a maximum current constraint.

Example 8. The processor of any of examples 1-7 wherein the power management unit further comprises: thermal spike detection and control circuitry to detect a thermal spike event based on a temperature slope and to responsively trigger a hardware-based throttling response.

Example 9. A method comprising: executing instructions on one or more cores of a plurality of cores; controlling power consumption of each core of the plurality of cores by performing a plurality of operations comprising: determining a frequency ramp rate limit for at least one core of the plurality of cores based, at least in part, on a present frequency of the core; determining a maximum frequency of the core based, at least in part, on a measured temperature; and determining a first frequency of the core in accordance with the frequency ramp rate limit and the maximum frequency.

Example 10. The method of example 9 wherein the frequency ramp rate limit comprises a first frequency ramp rate limit if the present frequency of the core is above a first threshold and comprises a second frequency ramp rate limit if the present frequency of the core is below the first threshold, the first frequency ramp rate limit comprising a lower frequency ramp rate than the second frequency ramp rate limit.

Example 11. The method of examples 9 or 10 wherein the frequency ramp rate limit is determined based on frequency ramp rate limit data comprising a plurality of frequency ranges mapped to a corresponding plurality of frequency ramp rate limits, wherein the frequency ramp rate limit is determined for the core based on the present frequency of the core falling within a corresponding frequency range of the plurality of frequency ranges.

Example 12. The method of any of examples 9-11 wherein the maximum frequency of the core is determined based on temperature-frequency data comprising a plurality of temperature ranges mapped to a corresponding plurality of frequency downstep values, the frequency limiter to determine the maximum frequency of the core by identifying a first frequency downstep value associated with a first temperature range corresponding to the measured temperature, and subtracting the first frequency downstep value from a maximum supported frequency value.

Example 13. The method of any of examples 9-12 wherein the first frequency of the core is determined further based on one or more of power budget constraints, thermal limits, and one or more power/performance requests.

Example 14. The method of any of examples 9-13 further comprising: determining a voltage at which to operate the core based on frequency-voltage data comprising a mapping of frequencies to voltages.

Example 15. The method of any of examples 9-14 wherein the voltage at which to operate the core is determined further in accordance with a maximum current constraint.

Example 16. The method of any of examples 9-15 further comprising: detecting a thermal spike event based on a temperature slope; and responsively triggering a hardware-based throttling response.

Example 17. A machine-readable medium having program code stored thereon which, when executed by a machine, causes the machine to perform the operations of: executing instructions on one or more cores of a plurality of cores; controlling power consumption of each core of the plurality of cores by performing a plurality of operations comprising: determining a frequency ramp rate limit for at least one core of the plurality of cores based, at least in part, on a present frequency of the core; determining a maximum frequency of the core based, at least in part, on a measured temperature; and determining a first frequency of the core in accordance with the frequency ramp rate limit and the maximum frequency.

Example 18. The machine-readable medium of example 17 wherein the frequency ramp rate limit comprises a first frequency ramp rate limit if the present frequency of the core is above a first threshold and comprises a second frequency ramp rate limit if the present frequency of the core is below the first threshold, the first frequency ramp rate limit comprising a lower frequency ramp rate than the second frequency ramp rate limit.

Example 19. The machine-readable medium of any of examples 17 or 18 wherein the frequency ramp rate limit is determined based on frequency ramp rate limit data comprising a plurality of frequency ranges mapped to a corresponding plurality of frequency ramp rate limits, wherein the frequency ramp rate limit is determined for the core based on the present frequency of the core falling within a corresponding frequency range of the plurality of frequency ranges.

Example 20. The machine-readable medium of any of examples 17-19 wherein the maximum frequency of the core is determined based on temperature-frequency data comprising a plurality of temperature ranges mapped to a corresponding plurality of frequency downstep values, the frequency limiter to determine the maximum frequency of the core by identifying a first frequency downstep value associated with a first temperature range corresponding to the measured temperature, and subtracting the first frequency downstep value from a maximum supported frequency value.

Example 21. The machine-readable medium of any of examples 17-20 wherein the first frequency of the core is determined further based on one or more of power budget constraints, thermal limits, and one or more power/performance requests.

Example 22. The machine-readable medium of any of examples 17-21 further comprising program code to cause the machine to perform the operations of: determining a voltage at which to operate the core based on frequency-voltage data comprising a mapping of frequencies to voltages.

Example 23. The machine-readable medium of any of examples 17-22 wherein the voltage at which to operate the core is determined further in accordance with a maximum current constraint.

Example 24. The machine-readable medium of any of examples 17-23 further comprising program code to cause the machine to perform the operations of: detecting a thermal spike event based on a temperature slope; and responsively triggering a hardware-based throttling response.

Example 25. A processor comprising: a plurality of cores to execute instructions; and a power management unit to control power consumption of each core of the plurality of cores, the power management unit comprising: a power step governor to determine a power step limit for at least one core of the plurality of cores based, at least in part, on present power consumption metrics of the core, a voltage limiter or frequency limiter to determine a maximum voltage or a maximum frequency of the core, respectively, based, at least in part, on a measured temperature, and limit resolution circuitry to determine a first frequency or a first power level of the core in accordance with the power step limit and the maximum voltage and/or maximum frequency.

Example 26. The processor of any of examples 17-25 wherein the power step limit comprises a first power step limit if the present power consumption of the core is above a first threshold and comprises a second power step limit if the present power consumption of the core is below the first threshold, the first power step limit comprising a lower power step than the second power step limit.

Example 27. The processor of any of examples 17-26 wherein the power step governor is to determine the power step limit based on power data comprising a plurality of power ranges mapped to a corresponding plurality of power step limits, the power step governor to determine the power step limit for the core based on the present power usage of the core falling within a corresponding power range of the plurality of power ranges.

Example 28. The processor of any of examples 17-27 wherein the voltage limiter is to determine a maximum voltage of the core based on temperature-voltage data comprising a plurality of temperature ranges mapped to a corresponding plurality of maximum voltage values.

Example 29. The processor of any of examples 17-28 wherein the limit resolution circuitry is to determine the first power level of the core further based on one or more of power budget constraints, thermal limits, and one or more power/performance requests.

Example 30. The processor of any of examples 17-29 further comprising: work point determination circuitry to determine a voltage/frequency pair at which to operate the core based on frequency-voltage-power data comprising a mapping of frequencies, voltages, and power levels.

Example 31. The processor of any of examples 17-30 wherein the work point determination circuitry is to determine the voltage at which to operate the core further in accordance with a maximum current constraint.

Example 32. The processor of any of examples 17-31 wherein the power management unit further comprises: thermal spike detection and control circuitry to detect a thermal spike event based on a temperature slope and to responsively trigger a hardware-based throttling response.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

**Claims**

1. A processor comprising:

   a plurality of cores to execute instructions; and
   a power management unit to control power consumption of each core of the plurality of cores, the power management unit comprising:

      a frequency ramp governor to determine a frequency ramp rate limit for at least one core of the plurality of cores based, at least in part, on a present frequency of the core,
      a frequency limiter to determine a maximum frequency of the core based, at least in part, on a measured temperature, and
      limit resolution circuitry to determine a first frequency of the core in accordance with the frequency ramp rate limit and the maximum frequency.

2. The processor of claim 1 wherein the frequency ramp rate limit comprises a first frequency ramp rate limit if the present frequency of the core is above a first threshold and comprises a second frequency ramp rate limit if the present frequency of the core is below the first threshold, the first frequency ramp rate limit comprising a lower frequency ramp rate than the second frequency ramp rate limit.

3. The processor of claims 1 or 2 wherein the frequency ramp rate governor is to determine the frequency ramp rate limit based on frequency ramp rate limit data comprising a plurality of frequency ranges mapped to a corresponding plurality of frequency ramp rate limits, the frequency ramp rate governor to determine the frequency ramp rate limit for the core based on the present frequency of the core falling within a corresponding frequency range of the plurality of frequency ranges.

4. The processor of any one of claims 1 to 3 wherein the frequency limiter is to determine the maximum frequency of the core based on temperature-frequency data comprising a plurality of temperature ranges mapped to a corresponding plurality of frequency downstep values, the frequency limiter to determine the maximum frequency of the core by identifying a first frequency downstep value associated with a first temperature range corresponding to the measured temperature, and subtracting the first frequency downstep value from a maximum supported frequency value.

5. The processor of any one of claims 1 to 4 wherein the limit resolution circuitry is to determine the first frequency of the core further based on one or more of power budget constraints, thermal limits, and one or more power/performance requests.

6. The processor of claim 5 further comprising:
work point determination circuitry to determine a voltage at which to operate the core in combination with the first frequency based on frequency-voltage data comprising a mapping of frequencies to voltages.

7. The processor of claim 6 wherein the work point determination circuitry is to determine the voltage at which to operate the core further in accordance with a maximum current constraint.

8. The processor of any one of claims 1 to 7 wherein the power management unit further comprises:
thermal spike detection and control circuitry to detect a thermal spike event based on a temperature slope and to responsively trigger a hardware-based throttling response.

9. A method comprising:

executing instructions on one or more cores of a plurality of cores;
controlling power consumption of each core of the plurality of cores by performing a plurality of operations comprising:

determining a frequency ramp rate limit for at least one core of the plurality of cores based, at least in part, on a present frequency of the core;
determining a maximum frequency of the core based, at least in part, on a measured temperature; and
determining a first frequency of the core in accordance with the frequency ramp rate limit and the maximum frequency.

10. The method of claim 9 wherein the frequency ramp rate limit comprises a first frequency ramp rate limit if the present frequency of the core is above a first threshold and comprises a second frequency ramp rate limit if the present frequency of the core is below the first threshold, the first frequency ramp rate limit comprising a lower frequency ramp rate than the second frequency ramp rate limit.

11. The method of claims 9 or 10 wherein the frequency ramp rate limit is determined based on frequency ramp rate limit data comprising a plurality of frequency ranges mapped to a corresponding plurality of frequency ramp rate limits, wherein the frequency ramp rate limit is determined for the core based on the present frequency of the core falling within a corresponding frequency range of the plurality of frequency ranges.

12. The method of any one of claims 9 to 11 wherein the maximum frequency of the core is determined based on temperature-frequency data comprising a plurality of temperature ranges mapped to a corresponding plurality of frequency downstep values, the frequency limiter to determine the maximum frequency of the core by identifying a first frequency downstep value associated with a first temperature range corresponding to the measured temperature, and subtracting the first frequency downstep value from a maximum supported frequency value.

13. The method of claim any one of 9 to 12 wherein the first frequency of the core is determined further based on one or more of power budget constraints, thermal limits, and one or more power/performance requests.

14. The method of claim 13 further comprising:
determining a voltage at which to operate the core based on frequency-voltage data comprising a mapping of frequencies to voltages.

15. The method of claim 14 wherein the voltage at which to operate the core is determined further in accordance with a maximum current constraint.

*Fig. 1*

200

Processor
210

Processing Engine
220A
Sensors
240

Processing Engine
220N
Sensors
240

Guide Unit
230

System Memory
205

Power Supply
250

Fig. 2

EP 4 439 233 A1

300

Guide Logic 300

PE Monitors 310
- Performance
- Efficiency
- Energy
- Thermal

Thread Monitors 320
- Thread A
- • • •
- Thread N

Thread Agnostic (TA) Rank Logic 330

Prediction Logic 335

Thread Specific (TS) Rank Logic 340

TA Rankings 350

TS Rankings 360

HW-OS Interface 370

Scheduling Manager 380

Scheduler 390

Fig. 3

34

## TA Rankings
### 350

**Performance Order**

PE x
.
.
.
PE y

**Energy Order**

PE a
.
.
.
PE n

**Efficiency Order**

PE i
.
.
.
PE j

**Offline**

PE m
.
.
.
PE r

**Fig. 4**

## TS Rankings
### 360

**Thread A Rankings**

Performance Order

Efficiency Order

Energy Order

Reliability Order

• • •

**Thread N Rankings**

Performance Order

Efficiency Order

Energy Order

Reliability Order

**Fig. 5**

**Fig. 6**

EP 4 439 233 A1

| Event Vectors | Prediction Weights |
|---|---|
| **626** | **624** |

### Fig. 7A

Event Vectors
**626**

PE A

| Event1 | Event2 | Event3 | Event4 | } **730** |

| Event3 | Event5 | Event6 | } **732** |

⋮

PE N

| Event1 | Event4 | Event7 | } **734** |

| Event6 | Event8 | Event9 | } **736** |

### Fig. 7B

Prediction Weights
**624**

PE A

| Weight | Weight | Weight | Weight | } **740** |

| Weight | Weight | Weight | } **742** |

⋮

PE N

| Weight | Weight | Weight | } **744** |

| Weight | Weight | Weight | } **746** |

Fig. 8

**Fig. 9**

**Fig. 10**

GPU Tile **905**

P-unit(s) **931**

Gfx Core **1007**

Gfx Core **1008**

Memory **950**

Supervisor P-Unit **1030**

OS/FW Supervisory Software **970**

SoC Tile **910**

E-Core **1012**

E-Core **1013**

MC **1015**

P-unit(s) **933**

IO Tile **920**

**1015**

PU

E-Core Cluster **1010**

L2

L3

Fabric **1050**

L3

L2

**1016**

PU

E-Core Cluster **1011**

**1025**

PU

P-Core **1020**

L2

L2

**1026**

PU

P-Core **1021**

CPU Tile **915**

**Svor P-Unit 1030**
- TX Mailbox 1130
- RX Mailbox 1131
- Mem 1132

**P-Unit 1015**
- TX Mailbox 1116
- RX Mailbox 1117
- Mem 1118

Svor FW 1135

Svee FW 1136

Private Fabric 1147

Public Fabric 1146

API 1140

Primary Fabric 1145

Driver 1150

Global Agent 1155

*Fig. 11*

| STAGE 1201 | FEATURE 1202 | WLT SUB-CONDITION 1203 | SOC DIE BIASING 1204 | FEATURE CONDITION MET 1205 | FEATURE CONDITION NOT MET 1206 | TYPE OF ACTION 1207 |
|---|---|---|---|---|---|---|
| 0 | Priority Mailbox (e.g., overclocking & other software) | NA | NA | NA | 0 Cores Active – Security DoS Error: Ignore and Use Last Command | Parking (Thread Specific) |
| 1 | WLT & SoC Die Biasing | No Inference | Yes | Apply & Next Stage | NA | Containment (Core Specific) |
| | | | No | Skip Stage | NA | NA |
| | | Bursty/ Sustain | NA | Apply & Next Stage | Skip Stage | BU/SU : Parking (Core Specific) |
| | | BL/IDLE | No | Apply & Next Stage | Num Core Count Not Met – Skip Stage | BL/ID : Containment |
| | | | Yes | Apply & Next Stage | NA | BL/ID : Containment |
| 2 | Below PE Consolidation | Bursty/Sustain /No Inference | NA | Apply & Next Stage | Skip Stage | BU/SU : Parking (Core-Class Specific) |
| | | BL/IDLE | NA | Apply & Next Stage | Skip Stage | BL/ID : Containment (Core-Class Specific) |
| 3 | Survivability | NA | NA | Apply & Replace "Uncontained" with "Park" | Override (fixed default SoC die) | Parking (Core Specific) |
| 4 | Specific Core Selection Criteria – Dynamic Parking/ Containment | If BURSTY/SUSTAIN : Sort by Highest Perf – from Bottom most (Dynamic Sorting based on fields in guide unit) If BL/IDLE/NA : Sort by Highest Efficiency - Contain from Top Most (Dynamic Sorting based on fields in guide unit) If Survivability: Park Highest Power : Sort by Highest Perf and Park from Top Most (Dynamic Sorting based on fields in guide unit) | | | | | |

*Fig. 12*

EP 4 439 233 A1

EP 4 439 233 A1

**OS 1713**

Overclocking/SW
**1370**

T0  T1  T2  T3  T4

Execution Metrics **1341** → Scheduler **1710**

Config Cores

LP0  LP1
**PC0**

LP2  LP3
**PC1**

LP4 **EC2**   LP5 **EC3**   LP6 **EC4**   LP7 **EC5**

P-Unit **1030**

LP Capabilities Table(s) **1340**

Table Update **1348**

Unified Hint **1370**

Dynamic Core Config **1345**

HGS Perf/EE **1754**

Below PE Consolid **1306**   SoC Die Biasing **1305**   Survivability **1304**   WLT **1303**   MB **1302**

*Fig. 13*

**LP Capabilities Table(s) 1340**

| Global | EE3_CH | PERF3_CH | EE2_CH | PERF2_CH | EE1_CH | PERF1_CH | EE0_CH | PERF0_CH |
|---|---|---|---|---|---|---|---|---|
| LP0 | EE3 | PERF3 | EE2 | PERF2 | EE1 | PERF1 | EE0 | PERF0 |
| LP1 | EE3 | PERF3 | EE2 | PERF2 | EE1 | PERF1 | EE0 | PERF0 |
| LP2 | EE3 | PERF3 | EE2 | PERF2 | EE1 | PERF1 | EE0 | PERF0 |
| LP3 | EE3 | PERF3 | EE2 | PERF2 | EE1 | PERF1 | EE0 | PERF0 |
| LP4 | EE3 | PERF3 | EE2 | PERF2 | EE1 | PERF1 | EE0 | PERF0 |
| LP5 | EE3 | PERF3 | EE2 | PERF2 | EE1 | PERF1 | EE0 | PERF0 |
| LP6 | EE3 | PERF3 | EE2 | PERF2 | EE1 | PERF1 | EE0 | PERF0 |
| LP7 | EE3 | PERF3 | EE2 | PERF2 | EE1 | PERF1 | EE0 | PERF0 |
| LP8 | EE3 | PERF3 | EE2 | PERF2 | EE1 | PERF1 | EE0 | PERF0 |
| LP9 | EE3 | PERF3 | EE2 | PERF2 | EE1 | PERF1 | EE0 | PERF0 |
| | Class 3 | | Class 2 | | Class 1 | | Class 0 | |

MB
**1302**

Park/
Contain
LP Data

Class
Coding
**1401**

HGS
Perf/EE
**854**

Dynamic
Core
Config
**1345**

| ENCODING | Class 0 | Class 1 | Class 2 | Class 3 |
|---|---|---|---|---|
| 0 | Perf/EE from Guide Unit | Perf/EE from Guide Unit | Perf/EE from Guide Unit | Perf/WEE from Guide Unit |
| 1 | EE=255 for Contained Cores | Perf/EE from Guide Unit | Perf/EE from Guide Unit | EE=255 for Contained Cores |
| 2 | EE=Perf=00 | EE=Perf=00 | EE=Perf=00 | EE=Perf=00 |
| 3 | EE=Perf=00 | Perf/EE from Guide Unit | Perf/EE from Guide Unit | EE=Perf=00 |

*Fig. 14*

**Fig. 15**

EP 4 439 233 A1

**Accelerators 1625**

| | |
|---|---|
| VPU **1620** | IPU **1621** |

E-Core **2012**

E-Core **2013**

P-Core **2021**

LP0        LP1

HWP **1610**

EPP **1600**

HWP **1611**

EPP **1601**

HWP **1612**

EPP **1602**

HWP **1613**

EPP **1603**

HWP **1614**

EPP **1604**

HWP **1615**

EPP **1605**

**EPP Hints**

Operating System **1713**

T0    T1    T2    T3    T4    T5

*Fig. 16*

**Fig. 17**

EP 4 439 233 A1

*Fig. 18A*

Fig. 18B

Core Frequency
Ramp Rate
**1930**

Dynamic Ramp
Rate Selection
**1900**

Ramp
Rates
**1920**

Ramp Rate 1

Ramp Rate 2

Ramp Rate *n*

Rate Selector
**1910**

Workload Type **1915**

EPP Value **1916**

Workload
Metrics
**1970**

WLT
Determination
**1960**

HWP
**1950**

*Fig. 19*

FOR EACH WORKLOAD

Determine Workload Type Based on
Workload Execution Metrics
**2001**

Read Energy Performance Preference (EPP) Value
Associated With Workload
**2002**

Based on Workload Type and EPP Value, Generate or
Identify Dynamic Core Frequency Ramp Rate
**2003**

Determine Target Frequency in Accordance
With Workload Requirements, Power
Budget, and Thermal Constraints
**2004**

Transition Core to Target Frequency in Accordance
With Dynamic Core Frequency Ramp Rate
**2005**

Collect Workload Execution Metrics
**2006**

*Fig. 20*

Fig. 21

*Fig. 22*

Fig. 23

Power
(arb units)

7
6
5
4
3
2
1
0

0.040
0.035
0.030
0.025
0.020
0.015
0.010
0.005
0.000
-0.005
-0.010

Time (sec)

*Fig. 24*

Temp rise
(degC)

60
50
40
30
20
10
0

Fast
**2401**

2 bins/ms
**2402**

1 bin/ms
**2403**

0.5 bins/ms
**2404**

**Fig. 25**

EP 4 439 233 A1

Temperature
**2631**

I$_{CC}$ Max
Constraints
**2601**

P-Unit
**1030**

Frequency Limiter
**2621**

Frequency Limit

Power Budget
Constraints
**2602**

Thermal Limits
**2603**

Limit Resolution
**2610**

Freq

Work Point
Determination
**2611**

Freq/Voltage
**2612**

Power/Perf
Requests
**2605**

Freq Ramp Limit

Frequency
Ramp Governor
**2620**

Present Frequency
**2630**

*Fig. 26A*

*Fig. 26B*

EP 4 439 233 A1

```
                    ┌─────────────────────┐
                    │       START         │
                    └──────────┬──────────┘
                               │
                               ▼
          ┌──────────────────────────────────────────┐
      ┌──▶│      Each Sensor Reading Event           │◀──┐
      │   │              2701                         │   │
      │   └──────────────────┬───────────────────────┘   │
      │                      │                            │
      │                      ▼                            │
      │             ╱──────────────────╲                 │
      │            ╱    Power state      ╲                │
      └───────────╱   Transient Exceed    ╲              │
                  ╲     Threshold?        ╱               │
                   ╲      2702           ╱                │
                    ╲──────────┬────────╱                 │
                               │                          │
                               ▼                          │
          ┌──────────────────────────────────────────┐   │
          │ Calculate and Set Voltage Correction Value│   │
          │ Based on Current Target Voltage,          │   │
          │ Frequency, and Temp                       │   │
          │              2703                         │───┘
          └──────────────────────────────────────────┘
```

*Fig. 27*

**Fig. 28**

START

Capture Temperatures at Sampling Times
**2901**

Determine Slope Based on Temperatures and Sampling Times
**2902**

Slope > Threshold$_S$ &
Temp > Threshold$_T$
**2903**

**N**

**Y**

Perform Hardware-based Throttling
**2904**

Normal Power Management Control
**2904**

*Fig. 29*

Europäisches
Patentamt
European
Patent Office
Office européen
des brevets

## EUROPEAN SEARCH REPORT

Application Number

EP 23 21 3908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/060085 A1 (ANANTHAKRISHNAN AVINASH N [US] ET AL) 1 March 2018 (2018-03-01) * paragraph [0025] – paragraph [0047]; figures 1-3 * * paragraph [0124] – paragraph [0150]; figures 17-20 * | 1-15 | INV. G06F1/20 G06F1/3206 G06F1/3228 G06F1/324 G06F1/329 G06F9/50 |
| Y | US 2021/081027 A1 (PARK JONGLAE [KR] ET AL) 18 March 2021 (2021-03-18) * paragraph [0004] – paragraph [0009] * * paragraph [0027] – paragraph [0059]; figures 1-2 * * paragraph [0078] – paragraph [0116]; figures 4-11 * | 1-15 | |
| A | US 2018/301119 A1 (KOKER ALTUG [US] ET AL) 18 October 2018 (2018-10-18) * paragraph [0129] – paragraph [0160]; figures 6-9 * | 1-15 | |

TECHNICAL FIELDS
SEARCHED       (IPC)

G06F

The present search report has been drawn up for all claims

| Place of search | Date of completion of the search | Examiner |
|---|---|---|
| The Hague | 25 April 2024 | Knutsson, Frédéric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 3908

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2024

| Patent document cited in search report | | Publication date | Patent family member(s) | | Publication date |
|---|---|---|---|---|---|
| US 2018060085 | A1 | 01-03-2018 | US | 2018060085 A1 | 01-03-2018 |
| | | | US | 2020042065 A1 | 06-02-2020 |
| | | | WO | 2018044491 A1 | 08-03-2018 |
| US 2021081027 | A1 | 18-03-2021 | KR | 20210032213 A | 24-03-2021 |
| | | | US | 2021081027 A1 | 18-03-2021 |
| US 2018301119 | A1 | 18-10-2018 | US | 2018301119 A1 | 18-10-2018 |
| | | | US | 2020110458 A1 | 09-04-2020 |
| | | | US | 2022197362 A1 | 23-06-2022 |

EPO FORM P0459

For more details about this annex : see Official Journal of the European Patent Office, No. 12/82